# EUROPEAN PATENT APPLICATION

(11) **EP 4 557 313 A1**
(43) Date of publication of application: **21.05.2025**
(21) Application number: 23839937.2
(22) Date of filing: 11.07.2023
(51) Int. Cl.: G21F 9/06, C02F 1/72, C02F 1/66, C02F 1/58, C02F 9/00, C02F 101/00, C02F 101/10, C02F 101/16

(54) **METHOD FOR TREATING WASTEWATER USING TRANSITION METAL OXIDE**

(30) Priority: 13.07.2022 KR 20220086184; 10.08.2022 KR 20220099802; 07.09.2022 KR 20220113305; 21.04.2023 KR 20230052954; 21.04.2023 KR 20230052956
(71) Applicant: Korea Atomic Energy Research Institute, Daejeon 34057 (KR)
(72) Inventor: LIM, Seung Joo, Jeongeup-si, Jeollabuk-do 56204 (KR); CHOI, Wang Kyu, Daejeon 34083 (KR); CHOI, Byung-Seon, Daejeon 34048 (KR); PARK, Sang Yoon, Gongju-si, Chungcheongnam-do 32557 (KR)
(74) Representative: Icosa Europe
(86) International application number: PCT/KR2023/009887
(87) International publication number: WO 2024/014845

(57) **Abstract**

The present disclosure relates to a wastewater treatment method using a transition metal oxide, and more particularly, to a technology of treating wastewater including at least one of non-degradable organic matter, nitrogen, and phosphorus using a transition metal oxide.

## Description

### CROSS-REFERENCE TO RELATED APPLICATIONS

This application claims the priority of Korean Patent Application No. 2022-0086184 filed on 2022.07.13., No. 2022-0113305 filed on 2022.09.07., No. 2022-0099802 filed on 2022.08.10., No. 2023-0052954 filed on 2023.04.21. and No. 2023-0052956 filed on 2023.04.21. 00, 9887, in the Korean Intellectual Property Office, the disclosure of which is incorporated herein by reference.

### BACKGROUND

### Field

The present disclosure relates to a wastewater treatment method using a transition metal oxide, and more particularly, to a technology of treating wastewater including at least one of non-degradable organic matter, nitrogen, and phosphorus using a transition metal oxide.

### Description of the Related Art

Non-degradable organic matter is generated by the use of organic decontamination agents in nuclear power plants, nuclear power-related facilities, and radiation-using facilities, and wastewater including high concentrations of organic matter such as manure, food waste, and ammonia nitrogen or phosphorus is generated.

The non-degradable organic matter, nitrogen, or phosphorus present in such wastewater deteriorates the performance of a purification system used in a treatment process and reacts with metallic radioactive waste generated in other processes, thereby making the treatment more difficult, and thus needs to be separated and treated in the treatment process. However, when wastewater including non-degradable organic matter, nitrogen, or phosphorus is stored in a drum, there is a risk of explosion due to a non-degradable organic compound and the like reacting with an oxidizer to increase the pressure inside the drum. In addition, in the case of using an evaporation concentration method, which is one of the methods for treating radioactive waste such as a decontamination waste solution, since waste to be treated includes non-degradable organic compounds, environmental hormones such as dioxin may be emitted, and thus such a method may also have problems that are inappropriate for treating wastewater.

Accordingly, research is continuously being conducted to overcome the above-mentioned problems and improve the treatment efficiency and economic feasibility of wastewater including any one of non-degradable organic matter, nitrogen, and phosphorus.

As part of these efforts, a technology that generates hydroxyl radicals using ultraviolet rays and hydrogen peroxide and degrades organic acids (oxalic acid, etc.) generated from an organic acid-based decontamination waste solution was introduced and has been currently in common use. However, in the case of a technology of treating organic acids using radicals, since UV with a high energy level is used, the irradiation range of ultraviolet rays to generate hydroxyl radicals is very short, so that a large amount of UV equipment and hydrogen peroxide needs to be used, and in order to treat approximately 95% of oxalic acid in the decontamination waste solution, a treatment time of 5 hours or more is required, which causes problems of low economic feasibility and treatment efficiency. In addition, the present inventors introduced a wastewater treatment technology based on a simple process of injecting a solution pretreated with a semiconductor material doped with an organic or inorganic element and an oxidizer into wastewater including any one of non-degradable organic matter, nitrogen, and phosphorus, and irradiating radiation. However, apart from solving a problem of device corrosion due to acidic conditions, the wastewater treatment technology still shows a long treatment time and relatively low organic acid treatment efficiency, and thus has a problem that does not present a fundamental solution for the treatment efficiency and economic feasibility of wastewater.

Accordingly, there is an urgent need for research on a treatment technology for wastewater including any one of non-degradable organic matter, nitrogen, and phosphorus that can efficiently treat wastewater including any one of non-degradable organic matter, nitrogen, and phosphorus, and rapidly and completely treat wastewater with a strong oxidative degradation effect under alkaline conditions while improving the disadvantage of requiring a long treatment time.

### SUMMARY

The present disclosure has been made to overcome the above-described problem, and an object of the present disclosure is to provide a method for treating wastewater including at least one of non-degradable organic matter, nitrogen, and phosphorus by treating wastewater including at least one of non-degradable organic matter, nitrogen, and phosphorus with a strong oxidation degradation effect under alkaline conditions to overcome the device corrosion problem according to pH, and significantly reduce the treatment time while maintaining high treatment efficiency for non-degradable organic matter, nitrogen, and phosphorus, thereby greatly improving the economic efficiency of a wastewater treatment process.

An aspect of the present disclosure provides a wastewater treatment method, in which transition metal ions and peroxide are introduced, under alkaline conditions, to wastewater including at least one of non-degradable organic matter, nitrogen, and phosphorus.

Another aspect of the present disclosure provides a wastewater treatment device including a storage unit that stores wastewater including at least one of non-degradable organic matter, nitrogen, and phosphorus, a reaction unit that communicates with the storage unit and in which one of the non-degradable organic matter, nitrogen, and phosphorus is degraded, and an introduction unit that communicates with the reaction unit and introduces a transition metal and a peroxide to react with and degrade one of the non-degradable organic matter, nitrogen, and phosphorus.

In addition, the present disclosure provides a method for removing non-degradable organic matter included in a decontamination waste solution used in a nuclear power-related facility, the method including a first step of preparing a decontamination waste solution including transition metal ions and non-degradable organic matter, and a second step of introducing persulfate into the decontamination waste solution under alkaline conditions.

Yet another aspect of the present disclosure provides a method for removing non-degradable organic matter included in a liquid scintillation counter waste solution used in a nuclear power-related facility, the method including a first step of preparing a liquid scintillation counter waste solution including a transition metal nanocatalyst and non-degradable organic matter, and a second step of introducing persulfate into the liquid scintillation counter waste solution under alkaline conditions.

Still other aspect of the present disclosure provides a method for treating wastewater including at least one of nitrogen (N) and phosphorus (P), including adding a base to wastewater to adjust pH to 9 or higher and adding a transition metal salt catalyst, and adding a peroxide to the wastewater to oxidize the transition metal salt.

Still other aspect of the present disclosure provides a method for removing non-degradable organic matter included in a decontamination waste solution used in a nuclear power-related facility, the method for removing non-degradable organic matter included in a radioactive waste solution including a first step of preparing a decontamination waste solution including transition metal ions and non-degradable organic matter, and a second step of introducing barium hydroxide (Ba(OH)₂) and persulfate into the decontamination waste solution.

According to the present disclosure, it is possible to ensure stability in process operation and device corrosion problems depending on a pH by treating wastewater including at least one of non-degradable organic matter, nitrogen, and phosphorus with a strong oxidation degradation effect under alkaline conditions. In addition, it is possible to significantly improve the economic efficiency of the wastewater treatment process by shortening the treatment time by at least ten times, while maintaining treatment efficiency equivalent to or higher than that of conventional treatment methods for wastewater including at least one of non-degradable organic matter, nitrogen, and phosphorus.

### BRIEF DESCRIPTION OF THE DRAWINGS

The above and other aspects, features and other advantages of the present disclosure will be more clearly understood from the following detailed description taken in conjunction with the accompanying drawings, in which:
FIG. 1 is a graph showing results of removing low-concentration oxalic acid (2 mM) by injecting a transition metal (nickel), an alkali, and persulfate according to one embodiment of the present disclosure;
FIG. 2 is a graph showing results of removing low-concentration oxalic acid (2 mM) by injecting a transition metal (copper), an alkali, and persulfate according to an embodiment of the present disclosure;
FIG. 3A is a graph showing results of removing medium-concentration oxalic acid (10 mM) by injecting a transition metal (nickel), an alkali, and persulfate according to an embodiment of the present disclosure;
FIG. 3B is a graph showing results of removing medium-concentration oxalic acid (10 mM) by injecting a transition metal (copper), an alkali, and persulfate according to an embodiment of the present disclosure;
FIG. 4A is a graph showing results of removing high-concentration oxalic acid (20 mM) by injecting a transition metal (nickel), an alkali, and persulfate according to an embodiment of the present disclosure;
FIG. 4B is a graph showing results of removing high-concentration oxalic acid (20 mM) by injecting a transition metal (copper), an alkali, and persulfate according to an embodiment of the present disclosure;
FIGS. 5A and 5B are graphs showing results of removing oxalic acid by injecting transition metals (nickel and copper) and persulfate according to the present disclosure under acidic conditions;
FIGS. 6A and 6B are graphs showing results of removing oxalic acid by injecting only transition metals (nickel and copper) without persulfate according to the present disclosure, respectively;
FIG. 7 is a graph showing results of removing oxalic acid by injecting only persulfate without a transition metal according to the present disclosure;
FIG. 8 is a graph showing results of removing oxalic acid using iron as a transition metal according to the present disclosure;
FIG. 9 is a graph showing results of removing oxalic acid using a conventional general UV/hydrogen peroxide process;
FIG. 10 is a graph showing results of removing oxalic acid using a conventional general radiolysis process;
FIGS. 11 and 12 are graphs according to experiments confirming that a metal oxide according to the present disclosure is oxidized by persulfate;

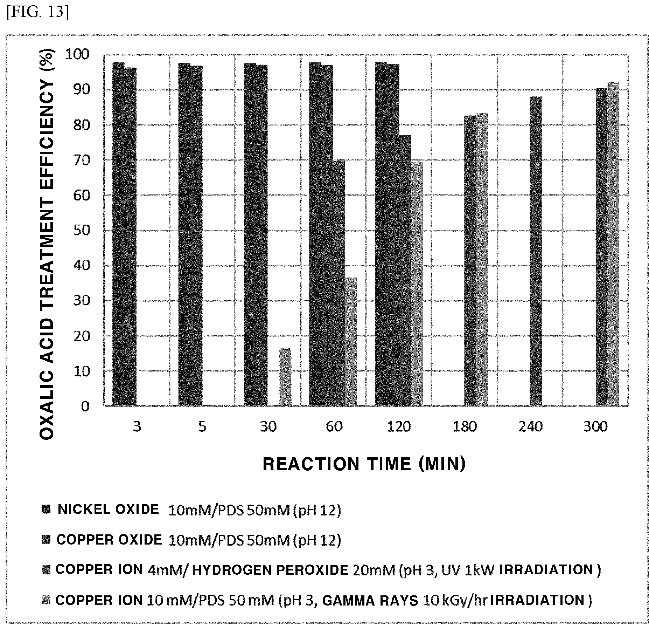

FIG. 13 is a graph characteristically showing effects of the present disclosure by synthesizing Examples and Comparative Examples according to the present disclosure;
FIG. 14 is a graph showing results of removing 2 mM of oxalic acid by injecting a transition metal (nickel), barium hydroxide, and persulfate according to an embodiment of the present disclosure;
FIG. 15 is a graph showing results of removing 2 mM of oxalic acid by injecting a transition metal (nickel), sodium hydroxide, and persulfate according to an embodiment of the present disclosure;
FIG. 16 is a graph showing a difference in waste solution treatment effect according to the pH adjustment methods of FIGS. 14 and 15;
FIG. 17 is a graph showing results of removing 2 mM of oxalic acid by injecting a transition metal (copper), barium hydroxide, and persulfate according to an embodiment of the present disclosure;
FIG. 18 is a graph showing results of removing 2 mM of oxalic acid by injecting a transition metal (copper), sodium hydroxide, and persulfate according to an embodiment of the present disclosure;
FIG. 19 is a graph showing a difference in waste solution treatment effect according to the pH adjustment methods of FIGS. 17 and 18;
FIG. 20 is a graph showing results of removing 10 mM of oxalic acid by injecting a transition metal (nickel), barium hydroxide, and persulfate according to an embodiment of the present disclosure;
FIG. 21 is a graph showing results of removing 10 mM of oxalic acid by injecting a transition metal (nickel), sodium hydroxide, and persulfate according to an embodiment of the present disclosure;
FIG. 22 is a graph showing a difference in waste solution treatment effect according to the pH adjustment methods of FIGS. 20 and 21;
FIG. 23 is a graph showing results of removing 10 mM of oxalic acid by injecting a transition metal (copper), barium hydroxide, and persulfate according to an embodiment of the present disclosure;
FIG. 24 is a graph showing results of removing 10 mM of oxalic acid by injecting a transition metal (copper), sodium hydroxide, and persulfate according to an embodiment of the present disclosure;
FIG. 25 is a graph showing a difference in waste solution treatment effect according to the pH adjustment methods of FIGS. 23 and 24;
FIG. 26 is a graph showing results of removing 20 mM of oxalic acid by injecting a transition metal (nickel), barium hydroxide, and persulfate according to an embodiment of the present disclosure;
FIG. 27 is a graph showing results of removing 20 mM of oxalic acid by injecting a transition metal (nickel), sodium hydroxide, and persulfate according to an embodiment of the present disclosure;
FIG. 28 is a graph showing a difference in waste solution treatment effect according to the pH adjustment methods of FIGS. 26 and 27;
FIG. 29 is a graph showing results of removing 20 mM of oxalic acid by injecting a transition metal (copper), barium hydroxide, and persulfate according to an embodiment of the present disclosure;
FIG. 30 is a graph showing results of removing 20 mM of oxalic acid by injecting a transition metal (copper), sodium hydroxide, and persulfate according to an embodiment of the present disclosure;
FIG. 31 is a graph showing a difference in waste solution treatment effect according to the pH adjustment methods of FIGS. 29 and 30;
FIGS. 32 and 33 are graphs showing liquid scintillation counter waste solution treatment effects by adding nickel, alkali, and persulfate according to an embodiment of the present disclosure;
FIGS. 34 and 35 are graphs showing liquid scintillation counter waste solution treatment effects when injecting only nickel without persulfate;
FIGS. 36 and 37 are graphs showing liquid scintillation counter waste solution treatment effects when injecting only persulfate without nickel;
FIG. 38 is a graph showing treatment efficiency of a liquid scintillation counter waste solution by iron, acid, and gamma-ray irradiation;
FIG. 39 is a graph showing treatment efficiency of a liquid scintillation counter waste solution by copper, neutral, and gamma-ray irradiation;

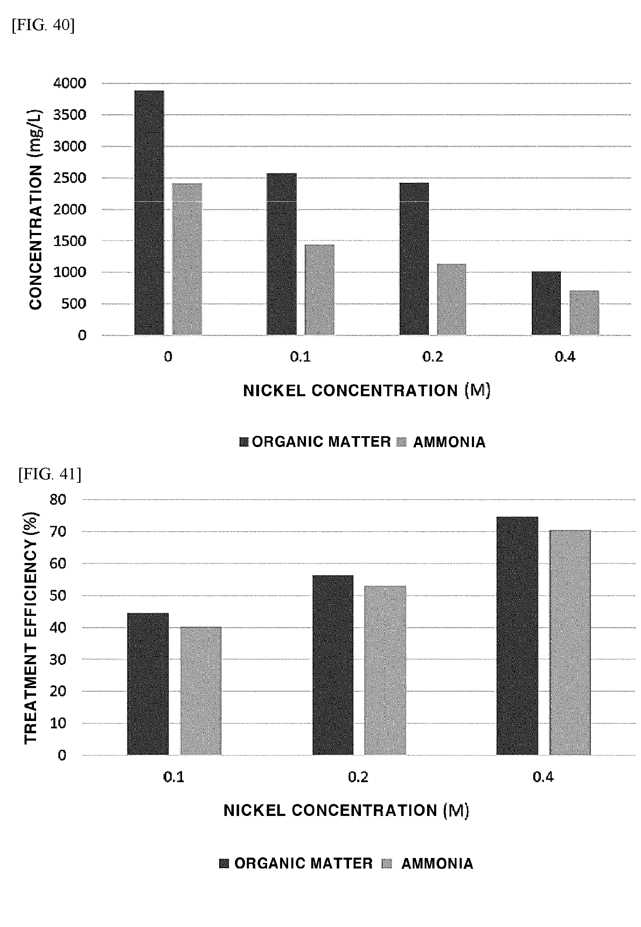

FIG. 40 is a graph showing comparing concentrations of organic matter (TOC) and ammonia at the time of addition and after 1 hour, respectively, according to the content of nickel salt added to wastewater according to a preferred embodiment of the present disclosure;
FIG. 41 is a graph showing comparing the treatment efficiency of organic matter (TOC) and ammonia for 1 hour according to the content of nickel salt in the same experiment as FIG. 40;

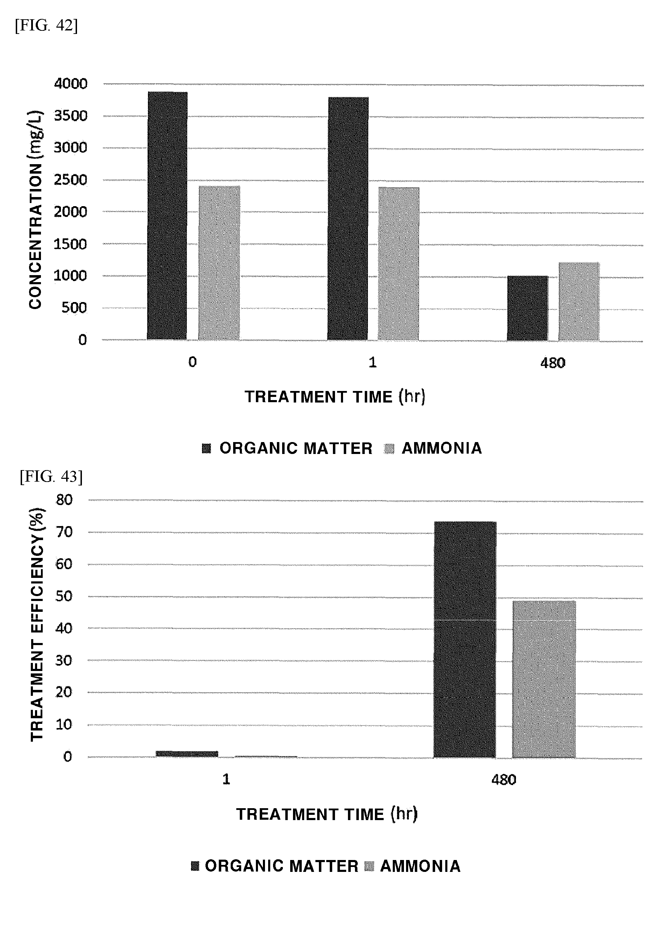

FIG. 42 is a graph showing comparing the concentrations of organic matter (TOC) and ammonia after 0 hour, 1 hour, and 480 hours, respectively, by treating the same wastewater as FIG. 40 and FIG. 41 for 1 hour using a microbial treatment method of the related art;
FIG. 43 is a graph showing comparing the treatment efficiency after 1 hour and 480 hours, respectively, calculated by the concentrations of organic matter (TOC) and ammonia measured in FIG. 42;

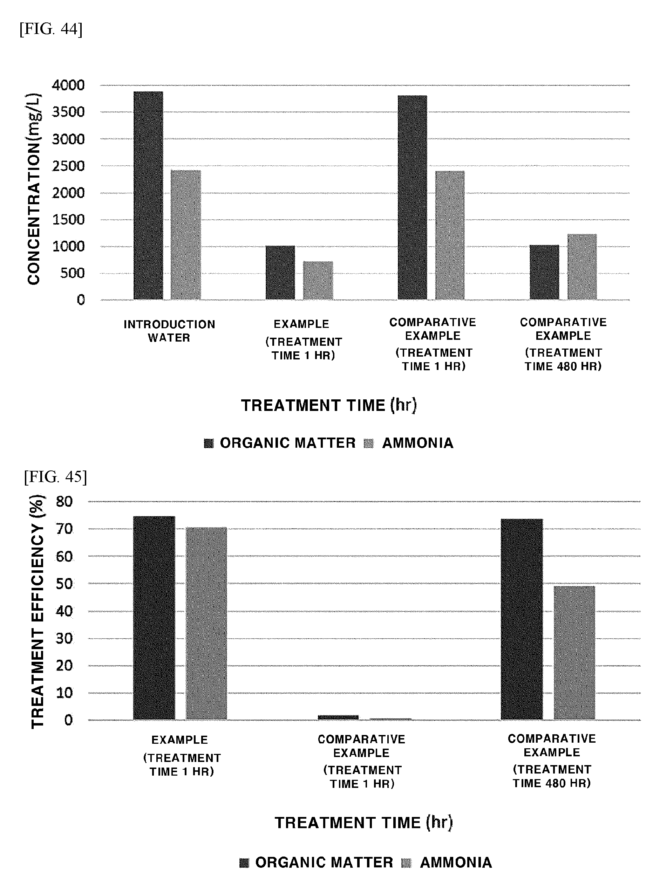

FIG. 44 is a graph showing comparing the concentrations of organic matter (TOC) and ammonia in wastewater treated according to a nickel salt-using wastewater treatment method of the present disclosure and a microorganism-using wastewater treatment method; and
FIG. 45 is a graph comparing the treatment efficiencies of wastewater treated by the treatment method according to the present invention and the treatment method according to the prior art according to respective conditions.

### DETAILED DESCRIPTION OF THE EMBODIMENT

The present disclosure will be described more fully hereinafter with reference to the accompanying drawings, in which exemplary embodiments of the invention are shown. The present disclosure may be implemented in various different forms and is not limited to embodiments described herein.

As described above, conventional technologies for treating wastewater including at least one of non-degradable organic matter, nitrogen, and phosphorus have limitations in efficient treatment due to decreased process efficiency caused by excessive treatment time and low treatment efficiency, problems in equipment corrosion caused by acidic conditions, and the like. In addition, conventional treatment methods using microorganisms have problems such as increased volume of an aeration tank and increased retention time due to the slow growth rate of nitrifying microorganisms.

Accordingly, the present disclosure found the solution of the above-mentioned problems by providing a wastewater treatment method including a first step of preparing the wastewater including transition metal ions and a second step of adding peroxide to the wastewater under alkaline conditions, as a method for treating wastewater including at least one of non-degradable organic matter, nitrogen, and phosphorus.

According to the present disclosure, it is possible to ensure stability in process operation and device corrosion problems depending on a pH by treating wastewater including at least one of non-degradable organic matter, nitrogen, and phosphorus with a strong oxidation degradation effect under alkaline conditions. In addition, it is possible to significantly improve the economic efficiency of the wastewater treatment process by shortening the treatment time at least ten times, while maintaining treatment efficiency equivalent to or higher than that of conventional treatment methods for wastewater including at least one of non-degradable organic matter, nitrogen, and phosphorus.

Hereinafter, a wastewater treatment method according to the present disclosure will be described.

The first step of the wastewater treatment method according to the present disclosure is a step of preparing the wastewater including the transition metal ions.

The wastewater may be radioactive wastewater or livestock wastewater generated from nuclear facilities. In this case, the radioactive wastewater may be a decontamination waste solution or liquid scintillation counter waste solution generated from the nuclear facilities. In addition, the livestock wastewater may be wastewater including a high concentration of organic matter including at least one of nitrogen (N) and phosphorus (P), as well as wastewater including a high salt.

The decontamination waste solution refers to a waste solution generated by a decontamination process performed in a nuclear decommissioning facility, a radiation (radioactivity) facility, etc., and more specifically, may be a waste solution including an organic decontamination agent. Since the non-degradable organic compounds including such organic decontamination agents deteriorate the performance of a purification system used in a treatment process when treating the radioactive waste solution and react with metallic radioactive waste generated in other processes, making the treatment more difficult, so that separate disposal of non-degradable organic compounds is necessarily required.

In addition, the liquid scintillation counter waste solution is a waste solution generated by using a liquid scintillation counter for the purpose of measuring and analyzing beta nuclides, and may include, for example, a waste fluorescent solution. At this time, the liquid scintillation counter waste solution may include any type known for measuring radiation, such as a liquid scintillation material and a plastic scintillation material, without particular limitation. In addition, the waste fluorescent solution may refer to a waste solution including a compound including a benzene ring as a nuclear structure used as a scintillation material, and the waste fluorescent solution may include at least one selected from the group consisting of triethyl phosphate; p-bis(o-methylstyryl)benzene; sodium dioctyl sulfosuccinate; ethylene oxide-nonylphenol polymer; 2,5-diphenyloxazole; 1,4-bis[5-phenyloxazol-2-yl]benzene; diisopropylnaphthalene; and a compound of phosphoric acid, 2-ethylhexyl ester and 2,2'-iminobis, but is not limited thereto.

At this time, the non-degradable organic matter may vary depending on a type of wastewater and is not particularly limited, and for example, may include at least one selected from the group consisting of oxalic acid, citric acid, formic acid, picolinic acid, ethylenediamine-N,N,N',N'-tetraacetic acid (EDTA), gluconic acid, acetic acid and sulfamic acid, and the like.

Meanwhile, in the present disclosure, efficient separation/disposition/treatment of the non-degradable organic compound means reducing the content of the non-degradable organic compound in the wastewater described above, and ultimately, may also mean substantially removing the organic decontamination agent (that is, reducing the content of the organic decontamination agent in the decontamination waste solution to approximately 0%). More specifically, in the present disclosure, efficient treatment of the non-degradable organic compound in the wastewater above means reducing the content of oxalic acid, and ultimately, may also mean substantially removing oxalic acid (that is, reducing the content of oxalic acid in the decontamination waste solution to approximately 0%).

The present disclosure performs a second step of injecting peroxide into the wastewater under alkaline conditions to treat such wastewater, and at this time, the second step may be performed under alkaline conditions of pH 9 or higher by injecting barium hydroxide or sodium hydroxide.

In general, when persulfate is injected in an acidic or neutral environment, sulfuric acid radicals are generated by transition metal ions present in the wastewater including at least one of non-degradable organic matter, nitrogen, and phosphorus, and the organic waste solution is degraded by a radical reaction, but the radical conversion time of persulfate is slow, so that it takes a long time. In contrast, at a high alkalinity of pH 9 or higher, transition metal ions are converted to transition metal oxides, and when peroxide is injected into such transition metal oxides, the generation of sulfuric acid radicals and hydroxide radicals is suppressed, and the peroxide is adsorbed on the surface of the transition metal oxide to instantly increase an oxidation value of the transition metal oxide.

That is, in the present disclosure, transition metal ions present in the wastewater are converted into transition metal oxides by injecting barium hydroxide or sodium hydroxide into wastewater including at least one of non-degradable organic matter, nitrogen, and phosphorus, and then injecting peroxide, and the transition metal oxide adsorbs the peroxide, thereby increasing the oxidation value of the transition metal oxide. When the oxidation value of the transition metal oxide increases, the oxidation power increases significantly, thereby rapidly treating wastewater with excellent efficiency by a catalytic reaction by a metal oxide, rather than a sulfuric acid radical reaction by persulfate. Accordingly, if the transition metal ions in the wastewater including at least one of non-degradable organic matter, nitrogen, and phosphorus are not sufficient to react with the peroxide, the present disclosure may add the transition metal ions before the second step.

Meanwhile, in the second step of the method for treating the wastewater including at least one of non-degradable organic matter, nitrogen, and phosphorus according to the present disclosure, when only two of three conditions of the presence of transition metal ions, alkaline conditions, and peroxide are satisfied, the rapid treatment efficiency for non-degradable organic matter, nitrogen, and phosphorus for the purpose of the present disclosure may not be secured.

That is, in the present disclosure, since 90% or higher of non-degradable organic matter and the like is removed within 10 minutes after introducing a transition metal and peroxide when all of the three conditions of the presence of transition metal ions, alkaline conditions, and peroxide are satisfied, it may be seen that the treatment time may be shortened at least ten times while maintaining treatment efficiency equivalent to or higher than that of conventional treatment methods, thereby significantly improving the economic feasibility of a treatment process of wastewater including at least one of non-degradable organic matter, nitrogen, and phosphorus.

To this end, the transition metal ion may be at least one selected from the group consisting of scandium ion, titanium ion, vanadium ion, chromium ion, manganese ion, cobalt ion, cerium ion, copper ion, nickel ion, zinc ion, yttrium ion, zirconium ion, niobium ion, molybdenum ion, technetium ion, ruthenium ion, rhodium ion, palladium ion, silver ion, cadmium ion, hafnium ion, tantalum ion, tungsten ion, rhenium ion, osmium ion, iridium ion, platinum ion, gold ion, and mercury ion, and more preferably, nickel ion or copper ion. That is, since the purpose of the present disclosure is to efficiently treat wastewater through a high oxidation reaction by increasing the oxidation value of a transition metal by peroxide, the transition metal ions require transition metal ions of which the oxidation value may be increased by peroxide.

In addition, the peroxide may be persulfate or peroxide capable of oxidizing a transition metal oxide in terms of improving the wastewater treatment efficiency, and nonlimiting examples thereof may include at least one selected from the group consisting of peroxydisulfate, peroxymonosulfate, and salts thereof. At this time, the 'salt' may include at least one selected from the group consisting of potassium salts, sodium salts, and ammonium salts.

Meanwhile, when the peroxydisulfate is used as the persulfate, a redox potential difference is +2.1 V, and when peroxymonosulfate is used as the persulfate, the redox potential difference is +1.8 V. However, even in the case of the peroxymonosulfate, oxidizing power to oxidize transition metal oxides is sufficient, so that the persulfate may be appropriately selected and used depending on the redox potential difference, the amount and type of wastewater, and the like.

According to a preferred embodiment of the present disclosure, when the transition metal is nickel, for example, nickel in an ionic state mainly exists in a divalent ion, and thus the nickel may exist as a nickel oxide of NiO, Ni₂O₃ or Ni(OH)₂ at pH 9 or higher. When the persulfate according to the present disclosure is adsorbed on the surface of such a nickel oxide, the nickel oxidation value increases from +2 to +3 and +4 or higher due to the persulfate, and since nickel oxide with an instantaneous increase in oxidation value is in a very unstable state, a redox potential increases to become a strong oxidizer. The redox potential of Ni³⁺/Ni²⁺ of the nickel oxide is 3.5 to 3.8 V, which is much higher than the oxidizing power of hydroxyl radicals (2.8 V) or sulfuric acid radicals (2.5 to 3.1 V). In general, the redox potential of transition metal oxides increases in the order of Ti < V < Cr < Mn < Co < Ni as the oxidation value increases toward the late transition metals. Also, as the oxidation value of the transition metal oxide increases, the redox potential increases to have the characteristic of M³⁺/M²⁺ < M^{4+/}/M³⁺.

That is, since nickel ion or nickel oxide is most stable when existing as +2, the nickel oxide converted to +2 adsorbs persulfate again and participates in the oxidation reaction.

In contrast, iron exists as iron oxides of FeO, Fe₂O₃, and Fe(OH)₂ at pH 4 or higher, but a reaction oxidized from +2 to +3 is not a spontaneous reaction at -0.47 V, and the iron is converted from +3 to +2 rather than being oxidized from +3 to +4, and thus a catalytic effect by persulfate may hardly be expected.

Meanwhile, the transition metal may be included in an amount of 0.1 to 10 moles with respect to the non-degradable organic matter, more preferably in an amount of 0.5 to 5 moles with respect to the non-degradable organic matter, and most preferably in an amount of 0.8 to 2 moles with respect to the non-degradable organic matter. At this time, if the transition metal is included in less than 0.1 moles with respect to the non-degradable organic matter, there may be a problem that the treatment efficiency is reduced because the amount of metal oxide generated is small enough to degrade the waste solution. Further, if the transition metal is included in more than 10 moles with respect to the non-degradable organic matter, the solubility of persulfate is reduced, so that the amount of persulfate adsorbed to the metal oxide is reduced, which may cause a problem that the treatment efficiency is reduced.

In addition, the peroxide may be included in an amount of 1 to 20 moles with respect to the non-degradable organic matter, and more preferably, in an amount of 3 to 18 moles with respect to the non-degradable organic matter. In this case, if the peroxide is included in an amount of less than 1 mole with respect to the non-degradable organic matter, the amount of peroxide capable of oxidizing the transition metal after being adsorbed on the metal oxide may decrease, which may cause a problem of reduced treatment efficiency. In addition, if the peroxide is included in an amount of more than 20 parts by weight with respect to the non-degradable organic matter, the pH of the waste solution may be rapidly reduced, and a safety accident such as an explosion and the like may occur due to the rapid chemical reactivity of the peroxide.

As such, in the present disclosure, it is possible to ensure stability in process operation and device corrosion problems depending on a pH by treating wastewater including at least one of non-degradable organic matter, nitrogen, and phosphorus with a strong oxidation degradation effect under alkaline conditions. In addition, it is possible to significantly improve the economic efficiency of the wastewater treatment process by shortening the treatment time at least ten times, while maintaining treatment efficiency equivalent to or higher than that of conventional treatment methods for wastewater including at least one of non-degradable organic matter, nitrogen, and phosphorus.

Next, a wastewater treatment device according to the present disclosure will be described. However, in order to avoid duplication, the description of the parts that are identical in technical concept to the above-described wastewater treatment method will be omitted.

A wastewater treatment device according to the present disclosure includes a storage unit that stores wastewater including at least one of non-degradable organic matter, nitrogen, and phosphorus, a reaction unit that communicates with the storage unit and in which one of the non-degradable organic matter, nitrogen, and phosphorus is degraded, and an introduction unit that communicates with the reaction unit and introduces a transition metal and peroxide to react with and degrade one of the non-degradable organic matter, nitrogen, and phosphorus.

The storage unit serves to store the wastewater including at least one of non-degradable organic matter, nitrogen, and phosphorus for treatment.

Next, the reaction unit communicates with the storage unit, and provides a space in which the wastewater including at least one of the non-degradable organic matter, nitrogen, and phosphorus of the storage unit is transferred to react with the transition metal and the peroxide introduced from the introduction unit.

At this time, the reaction unit may perform the treatment through oxidation of the non-degradable organic matter included in the wastewater under alkaline conditions of pH 9 or higher by injecting alkali into the reaction unit. That is, the wastewater is transferred to the reaction unit through the storage unit, and the transferred wastewater is injected and reacted with transition metal ions, alkali, and peroxide through the introduction unit to convert the transition metal in the wastewater into a metal oxide. As such, since the converted metal oxide adsorbs the peroxide, the oxidation value of the metal oxide is increased, and thus the oxidation power is greatly increased, so that the wastewater may be rapidly treated with excellent efficiency by a catalytic reaction by the metal oxide rather than a sulfuric acid radical reaction by persulfate.

Next, the introduction unit communicates with the reaction unit and serves to introduce the transition metal, alkali, and peroxide into the reaction unit.

As such, the transition metal of the introduction unit may be included in an amount of 0.1 to 10 moles with respect to the non-degradable organic matter included in the storage unit, more preferably in an amount of 0.5 to 5 moles with respect to the non-degradable organic matter, and most preferably in an amount of 0.8 to 2 moles with respect to the non-degradable organic matter.

In addition, the persulfate may be included in an amount of 1 to 20 moles with respect to the non-degradable organic matter, and more preferably in an amount of 3 to 18 moles with respect to the non-degradable organic matter.

Hereinafter, the present disclosure will be described in more detail through Examples, but the following Examples do not limit the scope of the present disclosure, and should be interpreted as helping to understand the present disclosure.

### Example 1 - Treatment of decontamination waste solution according to the present disclosure - Low-concentration oxalic acid, nickel oxide

In order to treat oxalic acid, which was used as an organic acid and a complexing agent in a nuclear decontamination process, nickel, alkali, and persulfate were injected, and the oxalic acid concentration was prepared at 2 mM according to a concentration present in a decontamination waste solution. The alkali was adjusted to pH 12 using 2.5 M NaOH.

Thereafter, nickel was prepared at 0.625 M using nickel sulfate and then injected to 2 mM, which was the concentration present in the decontamination waste solution. Thereafter, the persulfate was injected to 10, 20, and 30 mM, and an oxalic acid treatment effect was confirmed over time.

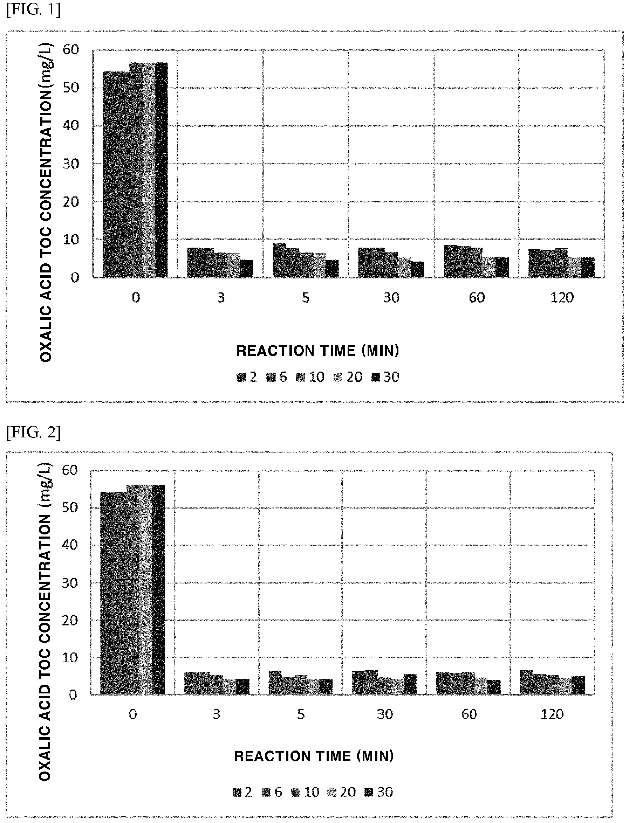

The oxalic acid treatment effect by nickel, alkali, and persulfate at pH 12 was confirmed by measuring TOC to completely remove organic carbon, and the oxalic acid concentration and treatment efficiency were calculated by subtracting the TOC concentration of the oxalic acid remaining after treatment, which were shown in Table 1 and FIG. 1 below.

**[Table 1]**

| Reaction time (min) | Persulfate concentration (mM) | | | | |
|---|---|---|---|---|---|
| | 2 | 6 | 10 | 20 | 30 |
| 3 | 88.8 | 88.9 | 90.2 | 92.5 | 92.5 |
| 5 | 88.2 | 91.5 | 90.2 | 92.5 | 92.5 |
| 30 | 88.3 | 88.0 | 91.4 | 92.4 | 90.0 |
| 60 | 88.9 | 89.2 | 88.8 | 91.7 | 92.6 |
| 120 | 87.8 | 90.1 | 90.4 | 90.9 | 92.0 |

As may be seen in Table 1 and FIG. 1 above, as the persulfate injection amount increased to 2, 6, 10, 20, and 30 mM, 87.8, 90.1, 90.4, 90.9, and 92.0% of oxalic acid was removed, and after 3 minutes of the reaction time, 88.8, 88.9, 90.2, 92.5, and 92.5% of oxalic acid was removed under the conditions of 2, 6, 10, 20, and 30 mM of the persulfate injection amount, and thus it may be seen that most of the oxalic acid was removed very quickly.

### Example 2 - Treatment of decontamination waste solution according to the present disclosure - Low-concentration oxalic acid, copper oxide

In order to treat oxalic acid, which was used as an organic acid and a complexing agent in a nuclear decontamination process, copper, alkali, and persulfate were injected, and the oxalic acid concentration was prepared at 2 mM according to a concentration present in a decontamination waste solution. The alkali was adjusted to pH 12 using 2.5 M NaOH.

Thereafter, copper was prepared at 0.625 M using copper sulfate and then injected to 2 mM, which was the concentration present in the decontamination waste solution. Thereafter, the persulfate was injected to 10, 20, and 30 mM, and the oxalic acid treatment effect was confirmed over time.

The oxalic acid treatment effect by copper, alkali, and persulfate at pH 12 was confirmed by measuring TOC to completely remove organic carbon, and the oxalic acid concentration and treatment efficiency were calculated by subtracting the TOC concentration of the oxalic acid remaining after treatment, which were shown in Table 2 and FIG. 2 below.

**[Table 2]**

| Reaction time (min) | Persulfate concentration (mM) | | | | |
|---|---|---|---|---|---|
| | 2 | 6 | 10 | 20 | 30 |
| 3 | 85.7 | 85.8 | 88.1 | 88.3 | 91.4 |
| 5 | 83.4 | 85.8 | 88.1 | 88.3 | 91.4 |
| 30 | 85.6 | 85.6 | 87.6 | 90.5 | 92.4 |
| 60 | 84.4 | 84.7 | 85.4 | 90.0 | 90.5 |
| 120 | 86.4 | 86.7 | 85.8 | 90.2 | 91.5 |

As may be seen in Table 2 and FIG. 2 above, as the persulfate injection amount increased to 2, 6, 10, 20, and 30 mM, 86.4, 86.7, 85.8, 90.2, and 91.5% of oxalic acid was removed, and after 3 minutes of the reaction time, 85.7, 85.8, 88.1, 88.3, and 91.4% of oxalic acid was removed under the conditions of 2, 6, 10, 20, and 30 mM of the persulfate injection amount, and thus it may be seen that most of the oxalic acid was removed very quickly.

### Example 3-1 - Treatment of decontamination waste solution according to the present disclosure - Medium-concentration oxalic acid, nickel oxide

In order to treat oxalic acid, which was used as an organic acid and a complexing agent in a nuclear decontamination process, nickel, alkali, and persulfate were injected, and the oxalic acid concentration was prepared at 10 mM according to a concentration present in a decontamination waste solution. The alkali was adjusted to pH 12 using 2.5 M NaOH.

Thereafter, nickel was prepared at 0.625 M using nickel sulfate and then injected to 10 mM, which was the concentration present in the decontamination waste solution. Thereafter, the persulfate was injected to 0, 10, 20, 30, 50, 100, and 150 mM, and the oxalic acid treatment effect was confirmed over time.

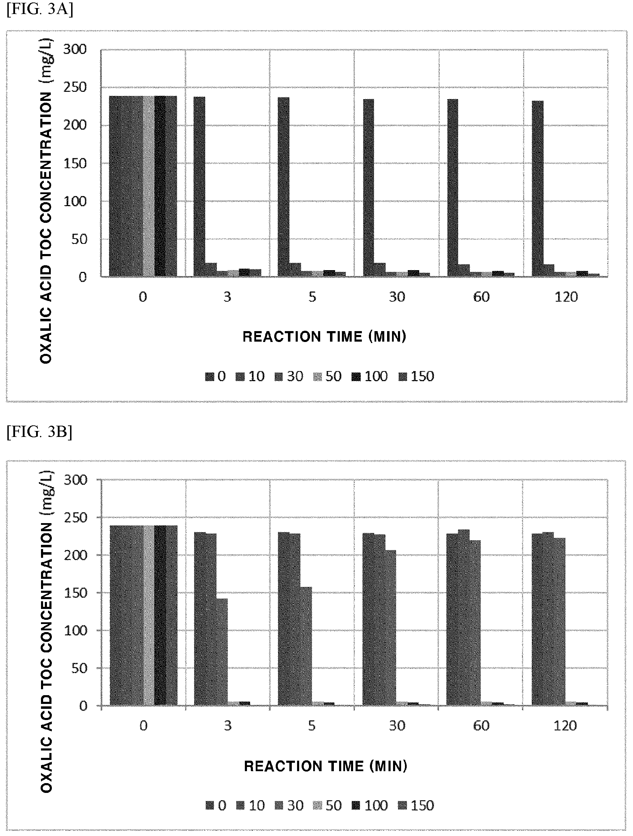

The oxalic acid treatment effect by nickel, alkali, and persulfate at pH 12 was confirmed by measuring TOC to completely remove organic carbon, and the oxalic acid concentration and treatment efficiency were calculated by subtracting the TOC concentration of the oxalic acid remaining after treatment, which were shown in Table 3 and FIG. 3A below.

**[Table 3]**

| Reaction time (min) | Persulfate concentration (mM) | | | | | |
|---|---|---|---|---|---|---|
| | 0 | 10 | 30 | 50 | 100 | 150 |
| 3 | 0.8 | 92.2 | 96.9 | 96.2 | 95.6 | 95.9 |
| 5 | 1.0 | 92.2 | 96.9 | 96.8 | 96.2 | 97.2 |
| 30 | 2.1 | 92.4 | 97.1 | 97.0 | 96.5 | 97.9 |
| 60 | 2.2 | 93.0 | 97.2 | 97.1 | 96.7 | 97.9 |
| 120 | 3.1 | 93.3 | 97.3 | 97.2 | 96.8 | 98.3 |

As maybe seen in Table 3 and FIG. 3A above, as the persulfate injection amount increased to 0, 10, 30, 50, 100, and 150 mM, 3.1, 93.3, 97.3, 97.2, 96.8, and 98.3% of oxalic acid was removed, and after 3 minutes of the reaction time, 0.8, 92.2, 96.9, 96.2, 95.6, and 95.9% of oxalic acid was removed under the conditions of 0, 10, 30, 50, 100, and 150 mM of the persulfate injection amount, and thus it may be seen that most of the oxalic acid was removed very quickly.

### Example 3-2 - Treatment of decontamination waste solution according to the present disclosure - Medium-concentration oxalic acid, copper oxide

In order to treat oxalic acid, which was used as an organic acid and a complexing agent in a nuclear decontamination process, copper, alkali, and persulfate were injected, and the oxalic acid concentration was prepared at 10 mM according to a concentration present in a decontamination waste solution. The alkali was adjusted to pH 12 using 2.5 M NaOH.

Thereafter, copper was prepared at 0.625 M using copper sulfate and then injected to 10 mM, which was the concentration present in the decontamination waste solution. Thereafter, the persulfate was injected to 0, 10, 20, 30, 50, 100, and 150 mM, and the oxalic acid treatment effect was confirmed over time.

The oxalic acid treatment effect by copper, alkali, and persulfate at pH 12 was confirmed by measuring TOC to completely remove organic carbon, and the oxalic acid concentration and treatment efficiency were calculated by subtracting the TOC concentration of the oxalic acid remaining after treatment, which were shown in Table 4 and FIG. 3B below.

**[Table 4]**

| Reaction time (min) | Persulfate concentration (mM) | | | | | |
|---|---|---|---|---|---|---|
| | 0 | 10 | 30 | 50 | 100 | 150 |
| 3 | 3.8 | 4.5 | 40.5 | 97.7 | 97.7 | 99.2 |
| 5 | 3.9 | 4.8 | 34.3 | 97.5 | 98.0 | 99.4 |
| 30 | 4.1 | 5.0 | 13.7 | 97.4 | 97.9 | 99.1 |
| 60 | 4.5 | 2.5 | 8.1 | 97.7 | 98.0 | 99.2 |
| 120 | 4.7 | 3.7 | 6.9 | 97.7 | 97.9 | 99.2 |

As maybe seen in Table 4 and FIG. 3B above, as the persulfate injection amount increased to 0, 10, 30, 50, 100, and 150 mM, 4.7, 3.7, 6.9, 97.7, 97.9, and 99.2% of oxalic acid was removed, and after 3 minutes of the reaction time, 3.8, 4.5, 40.5, 97.7, 97.7, and 99.2% of oxalic acid was removed under the conditions of 0, 10, 30, 50, 100, and 150 mM of the persulfate injection amount, and thus it may be seen that most of the oxalic acid was removed very quickly.

Example 4-1 - Treatment of decontamination waste solution according to the present disclosure - High-concentration oxalic acid, nickel oxide

In order to treat oxalic acid, which was used as an organic acid and a complexing agent in a nuclear decontamination process, nickel, alkali, and persulfate were injected, and the oxalic acid concentration was prepared at 20 mM according to a concentration present in a decontamination waste solution. The alkali was adjusted to pH 12 using 2.5 M NaOH.

Thereafter, nickel was prepared at 0.625 M using nickel sulfate and then injected to 20 mM, which was the concentration present in the decontamination waste solution. Thereafter, the persulfate was injected to 0, 20, 40, 60, 100, 200, and 300 mM, and the oxalic acid treatment effect was confirmed over time.

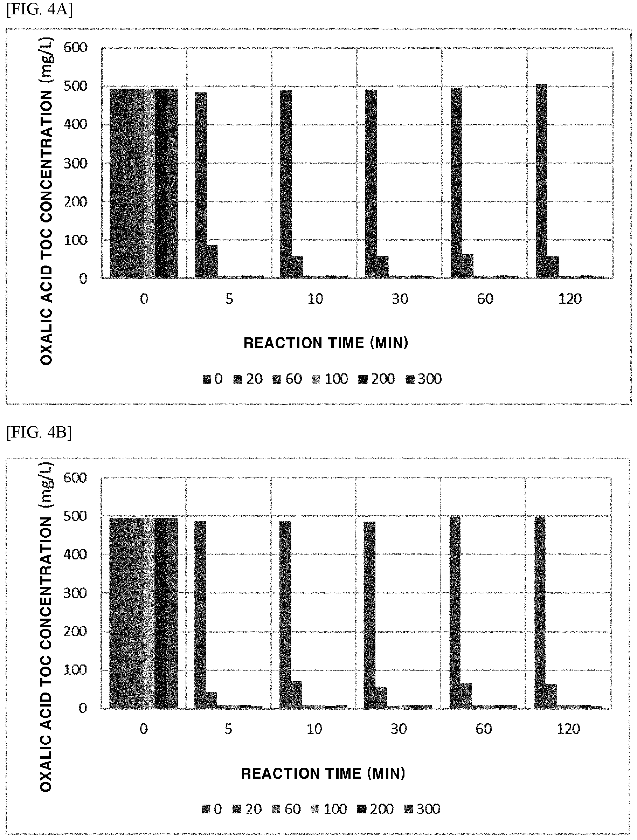

The oxalic acid treatment effect by nickel, alkali, and persulfate at pH 12 was confirmed by measuring TOC to completely remove organic carbon, and the oxalic acid concentration and treatment efficiency were calculated by subtracting the TOC concentration of the oxalic acid remaining after treatment, which were shown in Table 5 and FIG. 4A below.

**[Table 5]**

| Reaction time (min) | Persulfate concentration (mM) | | | | | |
|---|---|---|---|---|---|---|
| | 0 | 20 | 60 | 100 | 200 | 300 |
| 3 | 1.7 | 82.3 | 98.4 | 98.7 | 98.7 | 98.7 |
| 5 | 1.0 | 88.6 | 98.6 | 98.6 | 98.7 | 98.7 |
| 30 | 0.2 | 88.0 | 98.6 | 98.6 | 98.7 | 98.6 |
| 60 | 0.5 | 87.4 | 98.6 | 98.6 | 98.7 | 98.6 |
| 120 | 2.4 | 88.4 | 98.5 | 98.8 | 98.7 | 98.8 |

As may be seen in Table 5 and FIG. 4A above, as the persulfate injection amount increased to 0, 20, 40, 60, 100, 200, and 300 mM, 2.4, 88.4, 98.5, 98.8, 98.7, and 98.8% of oxalic acid was removed, and after 3 minutes of the reaction time, 1.7, 82.3, 98.4, 98.7, 98.7, and 98.7% of oxalic acid was removed under the conditions of 0, 20, 40, 60, 100, 200, and 300 mM of the persulfate injection amount, and thus it may be seen that most of the oxalic acid was removed very quickly.

### Example 4-2 - Treatment of decontamination waste solution according to the present disclosure - High-concentration oxalic acid, copper oxide

In order to treat oxalic acid, which was used as an organic acid and a complexing agent in a nuclear decontamination process, copper, alkali, and persulfate were injected, and the oxalic acid concentration was prepared at 20 mM according to a concentration present in a decontamination waste solution. The alkali was adjusted to pH 12 using 2.5 M NaOH.

Thereafter, copper was prepared at 0.625 M using copper sulfate and then injected to 20 mM, which was the concentration present in the decontamination waste solution. Thereafter, the persulfate was injected to 0, 20, 40, 60, 100, 200, and 300 mM, and the oxalic acid treatment effect was confirmed over time.

The oxalic acid treatment effect by copper, alkali, and persulfate at pH 12 was confirmed by measuring TOC to completely remove organic carbon, and the oxalic acid concentration and treatment efficiency were calculated by subtracting the TOC concentration of the oxalic acid remaining after treatment, which were shown in Table 6 and FIG. 4B below.

**[Table 6]**

| Reaction time (min) | Persulfate concentration (mM) | | | | | |
|---|---|---|---|---|---|---|
| | 0 | 10 | 30 | 50 | 100 | 150 |
| 3 | 1.2 | 91.3 | 98.4 | 98.5 | 98.6 | 98.7 |
| 5 | 1.3 | 85.6 | 98.4 | 98.6 | 98.7 | 98.6 |
| 30 | 1.6 | 88.7 | 98.6 | 98.6 | 98.6 | 98.5 |
| 60 | 0.5 | 86.6 | 98.5 | 98.6 | 98.5 | 98.6 |
| 120 | 1.1 | 87.0 | 98.6 | 98.5 | 98.6 | 98.6 |

As may be seen in Table 6 and FIG. 4B above, as the persulfate injection amount increased to 0, 20, 40, 60, 100, 200, and 300 mM, 1.1, 87.0, 98.6, 98.5, 98.6, and 98.6% of oxalic acid was removed, and after 3 minutes of the reaction time, 1.2, 91.3, 98.4, 98.5, 98.6, and 98.7% of oxalic acid was removed under the conditions of 0, 20, 40, 60, 100, 200, and 300 mM of the persulfate injection amount, and thus it may be seen that most of the oxalic acid was removed very quickly.

### Comparative Example 1 - Treatment of decontamination waste solution (nickel, acid conditions)

For comparison with Examples, acid and persulfate were injected into an organic waste solution including oxalic acid, and the oxalic acid concentration used in the experiment was prepared at 2 mM according to a concentration present in a decontamination waste solution. The acid was adjusted to pH 2 using 2.5 M H₂SO₄. Thereafter, nickel was prepared at 0.625 M using nickel sulfate and injected to reach 2 mM, which was the concentration present in the decontamination waste solution. Thereafter, the persulfate was injected to 10, 20, and 30 mM, and the oxalic acid treatment effect was confirmed over time.

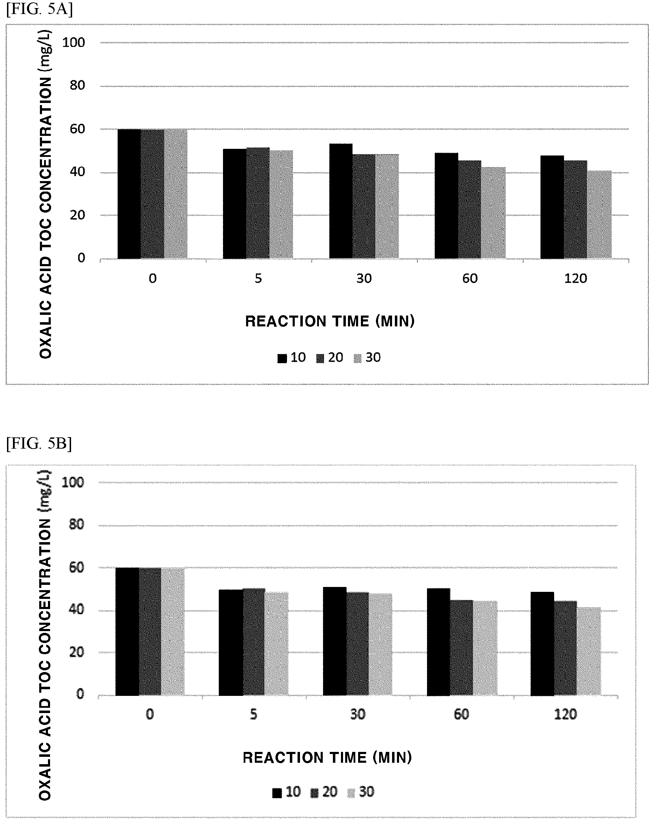

The oxalic acid treatment effect by nickel, alkali, and persulfate at pH 2 was confirmed by measuring TOC to completely remove organic carbon, and the oxalic acid concentration and treatment efficiency were calculated by subtracting the TOC concentration of the oxalic acid remaining after treatment, which were shown in Table 7 and FIG. 5A below.

**[Table 7]**

| Reaction time (min) | Persulfate concentration (mM) | | |
|---|---|---|---|
| | 10 | 20 | 30 |
| 5 | 15.1 | 14.1 | 15.8 |
| 30 | 10.6 | 19.1 | 19.1 |
| 60 | 17.3 | 23.3 | 28.9 |
| 120 | 19.5 | 23.7 | 32.0 |

As may be seen in Table 7 and FIG. 5A above, as the persulfate injection amount increased to 10, 20, and 30 mM, the oxalic acid was removed to 19.5, 23.7, and 32.0%. Although the oxalic acid was partially degraded, the rate was significantly lower than that under alkaline conditions, which had a limitation in the treatment of the decontamination waste solution.

### Comparative Example 2 - Treatment of decontamination waste solution (copper, acid conditions)

For comparison with Examples, acid and persulfate were injected into an organic waste solution, and the oxalic acid concentration used in the experiment was prepared at 2 mM according to a concentration present in a decontamination waste solution. The acid was adjusted to pH 2 using 2.5 M H₂SO₄. Thereafter, copper was prepared at 0.625 M using copper sulfate and injected to reach 2 mM, which was the concentration present in the decontamination waste solution. Thereafter, the persulfate was injected to 10, 20, and 30 mM, and the oxalic acid treatment effect was confirmed over time.

The oxalic acid treatment effect by copper, acid, and persulfate at pH 2 was confirmed by measuring TOC to completely remove organic carbon, and the oxalic acid concentration and treatment efficiency were calculated by subtracting the TOC concentration of the oxalic acid remaining after treatment, which were shown in Table 8 and FIG. 5B below.

**[Table 8]**

| Reaction time (min) | Persulfate concentration (mM) | | |
|---|---|---|---|
| | 10 | 20 | 30 |
| 5 | 16.2 | 15.2 | 18.2 |
| 30 | 14.3 | 18.7 | 19.4 |
| 60 | 15.2 | 24.4 | 25.9 |
| 120 | 18.4 | 25.3 | 31.2 |

As may be seen in Table 8 and FIG. 5B above, as the persulfate injection amount increased to 10, 20, and 30 mM, the oxalic acid was removed to 18.4, 25.3, and 31.2%. Although the oxalic acid was partially degraded, the rate was significantly lower than that under alkaline conditions, which had a limitation in the treatment of the decontamination waste solution.

### Comparative Example 3 - Treatment of decontamination waste solution (only nickel except for persulfate)

In order to confirm the effect of persulfate injection under very high alkaline conditions of pH 12, the pH was adjusted to 12 using 2.5 M NaOH, and then the oxalic acid treatment effect was confirmed in the case of injecting only nickel without persulfate. When only nickel was injected without persulfate, oxalic acid was prepared at 2 mM, and nickel was prepared at 0.625 M using nickel sulfate, and injected to reach the concentrations present in the decontamination waste solution of 1, 2, and 3 mM.

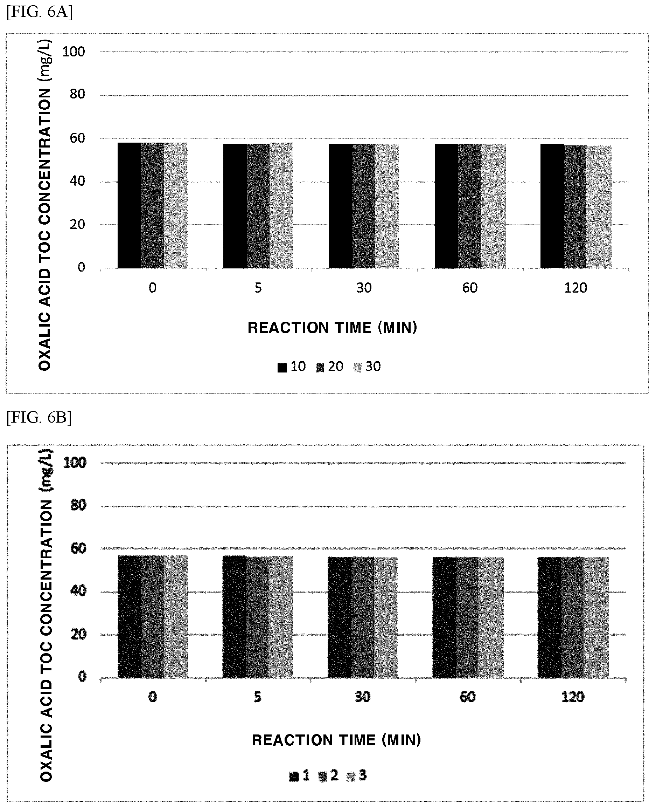

Thereafter, the oxalic acid treatment effect over time was confirmed and shown in Table 9 and FIG. 6A below.

**[Table 9]**

| Reaction time (min) | Nickel concentration (mM) | | |
|---|---|---|---|
| | 1 | 2 | 3 |
| 5 | 0.2 | 0.7 | 0.2 |
| 30 | 0.5 | 0.4 | 0.5 |
| 60 | 0.4 | 0.5 | 0.4 |
| 120 | 0.5 | 0.4 | 0.4 |

As may be confirmed in Table 9 and FIG. 6A above, when only nickel was injected without persulfate, as the nickel injection amount increased to 1, 2, and 3 mM, the oxalic acid was removed at 0.5, 0.4, and 0.4% at a reaction time of 120 minutes, which was almost not removed.

### Comparative Example 4 - Treatment of decontamination waste solution (only copper except for persulfate)

In order to confirm an effect of a copper oxide and persulfate injection under alkaline conditions of pH 12, the pH was adjusted to 12 using 2.5 M NaOH, and then the oxalic acid treatment effect was confirmed in the case of injecting only copper without persulfate. When only copper was injected without persulfate, oxalic acid was prepared at 2 mM, and copper was prepared at 0.625 M using copper sulfate, and injected to reach the concentrations present in the decontamination waste solution of 1, 2, and 3 mM. Thereafter, the oxalic acid treatment effect over time was confirmed. The oxalic acid treatment effect by alkali and copper at pH 12 was confirmed by measuring TOC to completely remove organic carbon, and the oxalic acid concentration and treatment efficiency (%) were calculated by subtracting the TOC concentration of the oxalic acid remaining after treatment, which were shown in Table 10 and FIG. 6B below.

**[Table 10]**

| Reaction time (min) | Copper concentration (mM) | | |
|---|---|---|---|
| | 1 | 2 | 3 |
| 5 | 0.3 | 0.4 | 0.3 |
| 30 | 0.4 | 0.4 | 0.4 |
| 60 | 0.2 | 0.6 | 0.5 |
| 120 | 0.3 | 0.2 | 0.3 |

As may be confirmed in Table 10 and FIG. 6B above, when only copper was injected without persulfate, as the copper injection amount increased to 1, 2, and 3 mM, the oxalic acid was removed at 0.3, 0.2, and 0.3% at a reaction time of 120 minutes, which was almost not removed.

### Comparative Example 5 - Treatment of decontamination waste solution (excluding transition metal)

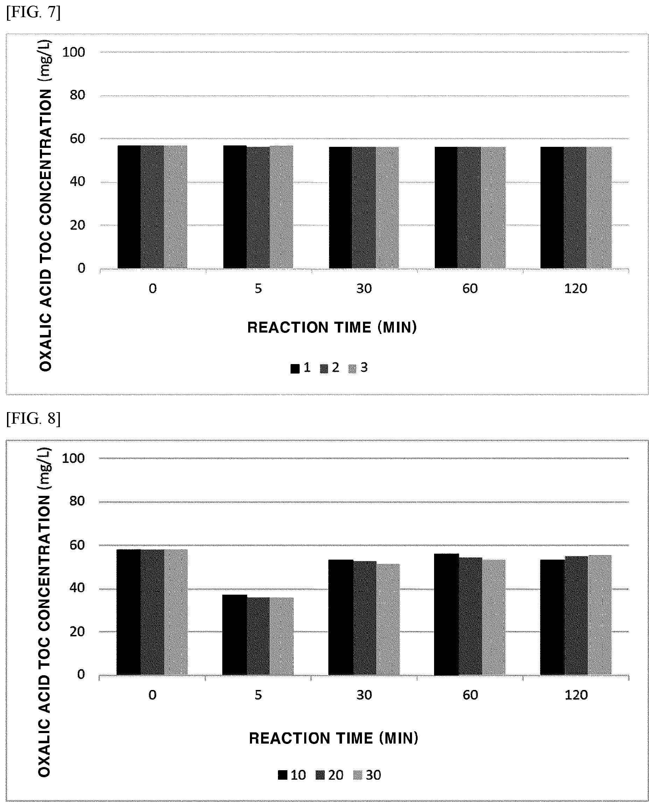

In order to confirm an effect of transition metal injection under very high alkaline conditions of pH 12, the pH was adjusted to 12 using 2.5 M NaOH, and then the oxalic acid treatment effect was confirmed in the case of injecting only persulfate without transition metal. In the case where only persulfate was injected without transition metal, oxalic acid was prepared at 2 mM, and then persulfate was injected to 10, 20, and 30 mM, and the oxalic acid treatment effect over time was confirmed and shown in Table 11 and FIG. 7 below.

**[Table 11]**

| Reaction time (min) | Persulfate concentration (mM) | | |
|---|---|---|---|
| | 10 | 20 | 30 |
| 5 | 0.9 | 1.0 | 0.2 |
| 30 | 1.0 | 0.9 | 0.7 |
| 60 | 1.0 | 1.0 | 0.5 |
| 120 | 1.2 | 1.4 | 1.6 |

As may be confirmed in Table 11 and FIG. 7 above, when only persulfate was injected without transition metal, as the persulfate injection amount increased to 10, 20, and 30 mM, the oxalic acid was removed at 1.2, 1.4, and 1.6% at a reaction time of 120 minutes, which was almost not removed.

### Comparative Example 6 - Treatment of decontamination waste solution (transition metal: iron)

For comparison with Example 1, alkali and persulfate were injected into a decontamination waste solution containing oxalic acid and iron, and the oxalic acid concentration was prepared at 2 mM according to a concentration present in the decontamination waste solution. The alkali was adjusted to pH 12 using 2.5 M NaOH.

Thereafter, iron was prepared at 0.625 M using iron sulfate and then injected to reach 2 mM, which was the concentration present in the decontamination waste solution. Thereafter, the persulfate was injected to 10, 20, and 30 mM, and the oxalic acid treatment effect was confirmed over time.

The oxalic acid treatment effect by iron, alkali, and persulfate at pH 12 was confirmed by measuring TOC to completely remove organic carbon, and the oxalic acid concentration and treatment efficiency (%) were calculated by subtracting the TOC concentration of the oxalic acid remaining after treatment, which were shown in Table 12 and FIG. 8 below.

**[Table 12]**

| Reaction time (min) | Persulfate concentration (mM) | | |
|---|---|---|---|
| | 10 | 20 | 30 |
| 5 | 35.8 | 37.8 | 37.3 |
| 30 | 7.4 | 9.0 | 10.4 |
| 60 | 2.6 | 5.7 | 7.9 |
| 120 | 7.4 | 4.3 | 4.1 |

As may be seen in Table 12 and FIG. 8 above, as the persulfate injection amount increased to 10, 20, and 30 mM, the oxalic acid was removed to 7.4, 4.3, and 4.1%, which was almost not removed. After 5 minutes of reaction time, under the persulfate injection amount conditions of 10, 20, and 30 mM, the oxalic acid TOC concentrations were 37.2, 36.0, and 36.3 mg/L, which were removed by 35.8, 37.8, and 37.3%. However, after 30 minutes of reaction time, under the persulfate injection amount conditions of 10, 20, and 30 mM, the oxalic acid TOC concentrations increased to 53.6, 52.7, and 51.9 mg/L, which was shown that the oxalic acid was temporarily adsorbed on iron oxide and then released again to increase the TOC concentration.

That is, unlike nickel oxide, the iron oxide hardly absorbed persulfate, and thus it was confirmed that oxalic acid temporarily absorbed on the iron oxide was released and remained as the reaction time passed.

### Comparative Example 7 - Comparison of UV/hydrogen peroxide treatment and radiation treatment (pH 3)

In order to treat oxalic acid, which was used as an organic acid and a complexing agent in a nuclear decontamination process, a conventional general UV/peroxide process and a radiation degradation process added with metal ions and an oxidizer were used.

In the experiment, an aqueous solution at a concentration of 10 mM oxalic acid was prepared, and then the pH was adjusted to 3 to prepare a solution to be treated. Copper ions were used as the metal ions, and persulfate was used as the oxidizer. The molar equivalent of copper ions and persulfate was 1:5.

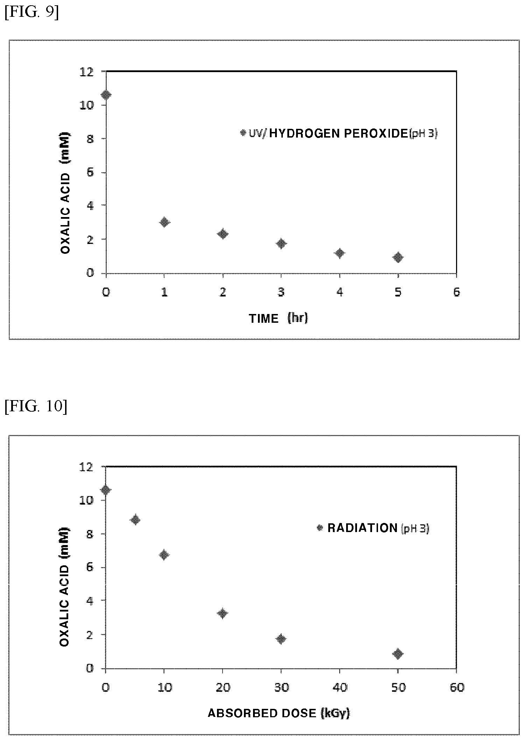

UV was used with a 1 kW medium-pressure ultraviolet lamp, and 20 mM hydrogen peroxide was added. UV was irradiated for 5 hours at a temperature condition of 35 to 55°C, and the radiation was irradiated at doses of 0, 10, 20, 30, and 50 kGy based on the absorbed dose, respectively, and the results were shown in FIGS. 9 and 10, respectively.

Referring to FIG. 9, as a result of degrading oxalic acid by the UV/hydrogen peroxide process, it was confirmed that the oxalic acid was degraded into 10 mM, 3.0 mM (degradation rate: 69.8%), 2.3 mM (77%), 1.7 mM (82.7%), 1.2 mM (88%), and 1.0 mM (90.4%) at pH 3 for 0, 1, 2, 3, 4, and 5 hours, respectively, which exhibited maximum treatment efficiency of 90.4% at 5 hours.

In addition, referring to FIG. 10, as a result of degrading oxalic acid by irradiating the radiation, the oxalic acid was degraded into 10 mM, 8.7 mM (degradation rate: 16.7%), 6.8 mM (36.5%), 3.2 mM (69.5%), 1.7 mM (83.4%), and 0.8 mM (92.2%) by irradiation at 0, 5, 10, 20, 30, and 50 kGy (0, 0.5, 1, 2, 3, and 5 hours) at a irradiation dose rate of 10 kGy/hr at pH 3, which showed a maximum treatment efficiency of 92.2% at 50 kGy.

**[Table 13]**

| Reaction time (min) | Present disclosure | | Related art | |
|---|---|---|---|---|
| | Nickel oxide 10 mM/PDS 50 mM (pH 12) | Copper oxide 10 mM/PDS 50 mM (pH 12) | Copper ion 4 mM/hydrogen peroxide 20 mM (pH 3, UV 1kW irradiation) | Copper ion 10 mM/PDS 50 mM (pH 3, gamma rays 10 kGy/hr irradiation) |
| 3 | 97.7 | 96.2 | - | - |
| 5 | 97.5 | 96.8 | - | - |
| 30 | 97.4 | 97.0 | - | 16.7 |
| 60 | 97.7 | 97.1 | 69.8 | 36.5 |
| 120 | 97.7 | 97.2 | 77 | 69.5 |
| 180 | - | - | 82.7 | 83.4 |
| 240 | - | - | 88 | - |
| 300 | - | - | 90.4 | 92.2 |

### Experimental Example 1

Experimental Example 1 was an experiment to confirm a reaction in which the oxidation value of a metal oxide according to the present disclosure is oxidized to persulfate. That is, since the persulfate became sulfuric acid radicals or hydroxide radicals at an alkaline pH, the experiment was conducted to show that the present disclosure was a result of oxidation of the metal oxide, not a radical reaction.

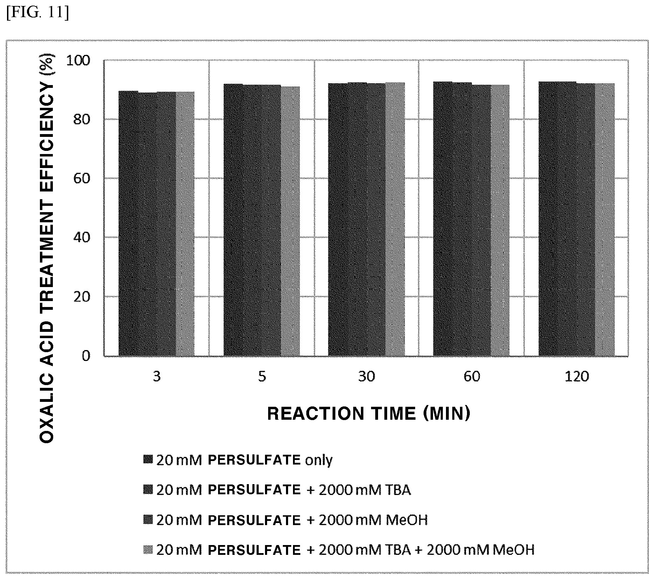

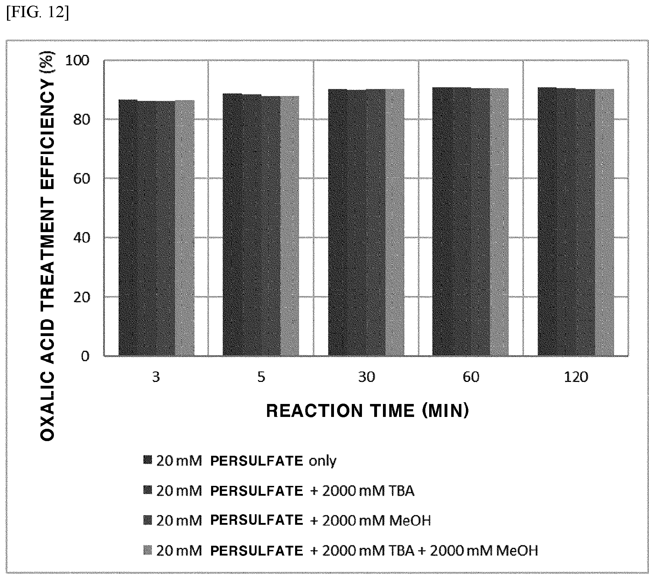

To this end, 2 mM copper oxide and 2 mM nickel oxide were used at a pH of 12 and a concentration of 2 mM oxalic acid, respectively, and the concentration of persulfate was 20 mM. Here, sufficient radical scavenger concentrations of TBA 2000 mM and MeOH 2000 mM were added to compare the oxalic acid degradation performance, which was shown in Table 14, FIG. 11 and Table 15, FIG. 12. It is known that TBA and MeOH, which are radical scavengers, may scavenge most of the radicals generated by a chemical reaction when present at 1000 times the concentration of the metal oxide.

**[Table 14]**

| Reaction time (min) | 20 mM persulfate Only | 20 mM persulfate + 2000 mM TBA | 20 mM persulfate + 2000 mM MeOH | 20 mM persulfate + 2000 mM TBA + 2000 mM MeOH |
|---|---|---|---|---|
| 3 | 89.6 | 89.0 | 89.4 | 89.2 |
| 5 | 92.0 | 91.5 | 91.5 | 91.2 |
| 30 | 92.3 | 92.5 | 92.1 | 92.5 |
| 60 | 92.7 | 92.5 | 91.5 | 91.6 |
| 120 | 92.7 | 92.7 | 92.2 | 92.1 |

**[Table 15]**

| Reaction time (min) | 20 mM persulfate Only | 20 mM persulfate + 2000 mM TBA | 20 mM persulfate + 2000 mM MeOH | 20 mM persulfate + 2000 mM TBA + 2000 mM MeOH |
|---|---|---|---|---|
| 3 | 86.8 | 86.1 | 86.2 | 86.5 |
| 5 | 88.7 | 88.5 | 87.9 | 87.7 |
| 30 | 90.3 | 89.9 | 90.1 | 90.2 |
| 60 | 90.7 | 90.7 | 90.5 | 90.4 |
| 120 | 90.8 | 90.5 | 90.2 | 90.1 |

Referring to Table 14, FIG. 11 and Table 15, FIG. 12 above, it could be seen that both nickel oxide and copper oxide were hardly affected by the scavengers, which was a reaction caused by oxidation of metal oxides rather than radical generation.

### Example 5 - pH adjustment with Ba(OH)₂ for 2 mM oxalic acid (nickel)

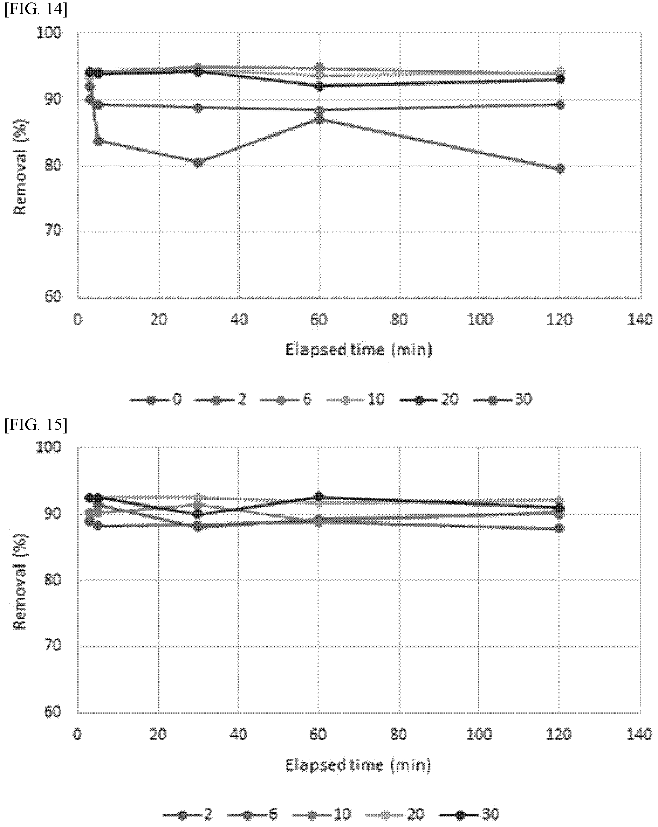

In order to treat oxalic acid, which was used as an organic acid and a complexing agent in a nuclear decontamination process, nickel, alkali, and persulfate were injected, and the oxalic acid concentration used in the experiment was prepared at 2 mM according to a concentration present in a decontamination waste solution. The alkali was adjusted to pH 12 by injecting Ba(OH)₂. Thereafter, nickel was prepared at 0.625 M using nickel sulfate and then injected to reach 2 mM, which was the concentration present in the decontamination waste solution. Thereafter, the persulfate was injected to 2, 6, 10, 20, and 30 mM, and the oxalic acid treatment effect was confirmed over time. The oxalic acid treatment effect by nickel, alkali, and persulfate at pH 12 was confirmed by measuring TOC to completely remove organic carbon, and the oxalic acid concentration and treatment efficiency (%) were calculated by subtracting the TOC concentration of the oxalic acid remaining after treatment, which were shown in Table 16 and FIG. 14 below. As may be seen in Table 16 and FIG. 14 above, as the persulfate injection amount increased to 2, 6, 10, 20, and 30 mM, 79.6, 93.8, 94.1, 93.1, and 89.2% of oxalic acid was removed, and after 3 minutes of the reaction time, 91.9, 93.6, 93.6, 94.1, and 89.9% of oxalic acid was removed under the conditions of 2, 6, 10, 20, and 30 mM of the persulfate injection amount, and thus it could be seen that most of the oxalic acid was removed very quickly.

**[Table 16]**

| Reaction time (min) | Persulfate concentration (mM) | | | | |
|---|---|---|---|---|---|
| | 2 | 6 | 10 | 20 | 30 |
| 3 | 91.9 | 93.6 | 93.6 | 94.1 | 89.9 |
| 5 | 83.8 | 94.2 | 94.0 | 93.9 | 89.2 |
| 30 | 80.5 | 94.9 | 94.4 | 94.2 | 88.7 |
| 60 | 87.0 | 94.7 | 93.7 | 92.0 | 88.3 |
| 120 | 79.6 | 93.8 | 94.1 | 93.1 | 89.2 |

### Example 6 - pH adjustment with NaOH for 2 mM oxalic acid (nickel)

Even in the same manner as in Example 5, sodium hydroxide was used instead of barium hydroxide to analyze the treatment efficiency for oxalic acid, which was shown in FIG. 15 and Table 17 below.

As may be seen in Table 17 and FIG. 15 above, as the persulfate injection amount increased to 2, 6, 10, 20, and 30 mM, 87.8, 90.1, 90.4, 92.0, and 90.9% of oxalic acid was removed, and after 3 minutes of the reaction time, 88.8, 88.9, 90.2, 92.5, and 92.5% of oxalic acid was removed under the conditions of 2, 6, 10, 20, and 30 mM of the persulfate injection amount, and thus it could be seen that most of the oxalic acid was removed very quickly.

**[Table 17]**

| Reaction time (min) | Persulfate concentration (mM) | | | | |
|---|---|---|---|---|---|
| | 2 | 6 | 10 | 20 | 30 |
| 3 | 88.8 | 88.9 | 90.2 | 92.5 | 92.5 |
| 5 | 88.2 | 91.5 | 90.2 | 92.5 | 92.5 |
| 30 | 88.3 | 88.0 | 91.4 | 92.4 | 90.0 |
| 60 | 88.9 | 89.2 | 88.8 | 91.7 | 92.6 |
| 120 | 87.8 | 90.1 | 90.4 | 92.0 | 90.9 |

### Experimental Example 2 - Comparison of effects of barium hydroxide and sodium hydroxide for 2 mM oxalic acid

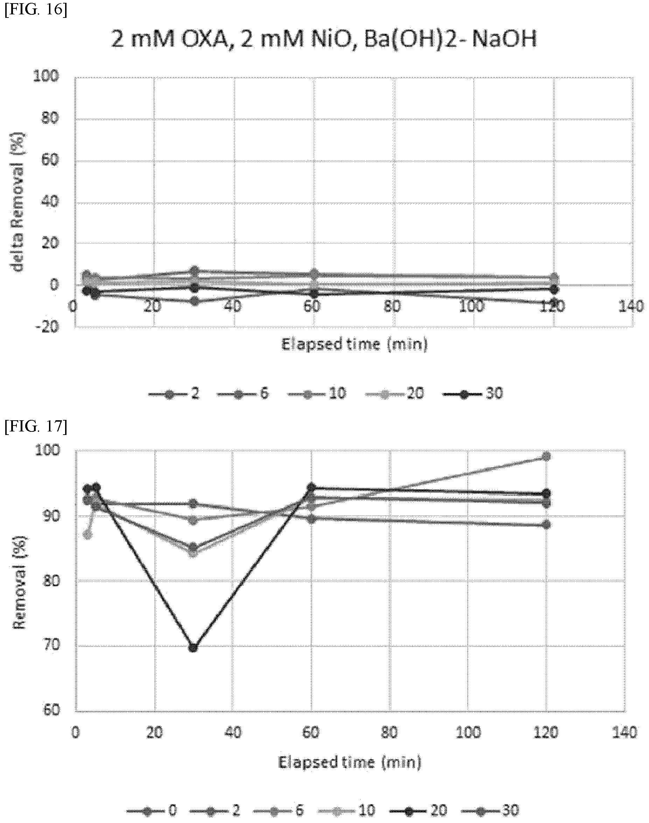

In order to determine a difference between a Ba(OH)₂ pH adjustment effect and a NaOH pH adjustment effect, the values in Table 17 were subtracted from the values in Table 16, and a wastewater degradation effect by the pH adjustment method was shown in Table 18 and FIG. 16.

As may be seen in Table 18 and FIG. 16 below, a difference between the two conditions was insignificant as -8.3, 3.8, 3.7, 1.0, and -1.7% as the persulfate injection amount increased to 2, 6, 10, 20, and 30 mM. After 3 minutes of the reaction time, the difference was insignificant as 3.0, 4.7, 3.4, 1.6, and -2.5% under the conditions of 2, 6, 10, 20, and 30 mM of persulfate injection amounts, which indicated that a difference due to pH adjustment was insignificant.

**[Table 18]**

| Reaction time (min) | Persulfate concentration (mM) | | | | |
|---|---|---|---|---|---|
| | 2 | 6 | 10 | 20 | 30 |
| 3 | 3.0 | 4.7 | 3.4 | 1.6 | -2.5 |
| 5 | -4.4 | 2.8 | 3.7 | 1.4 | -3.3 |
| 30 | -7.8 | 6.9 | 3.0 | 1.8 | -1.2 |
| 60 | -1.8 | 5.5 | 4.9 | 0.2 | -4.2 |
| 120 | -8.3 | 3.8 | 3.7 | 1.0 | -1.7 |

### Example 7 - pH adjustment with Ba(OH)₂ for 2 mM oxalic acid (copper)

In order to treat oxalic acid, which was used as an organic acid and a complexing agent in a nuclear decontamination process, copper, alkali, and persulfate were injected, and the oxalic acid concentration used in the experiment was prepared at 2 mM according to a concentration present in a decontamination waste solution. The alkali was adjusted to pH 12 by injecting Ba(OH)₂. Thereafter, copper was prepared at 0.625 M using copper sulfate and then injected to reach 2 mM, which was the concentration present in the decontamination waste solution. Thereafter, the persulfate was injected to 2, 6, 10, 20, and 30 mM, and the oxalic acid treatment effect was confirmed over time. The oxalic acid treatment effect by copper, alkali, and persulfate at pH 12 was confirmed by measuring TOC to completely remove organic carbon, and the oxalic acid concentration and treatment efficiency (%) were calculated by subtracting the TOC concentration of the oxalic acid remaining after treatment, which were shown in Table 19 and FIG. 17 below. As may be seen in Table 19 and FIG. 17 above, as the persulfate injection amount increased to 2, 6, 10, 20, and 30 mM, 88.6, 99.1, 92.5, 93.5, and 92.1% of oxalic acid was removed, and after 3 minutes of the reaction time, 92.5, 92.7, 87.2, 94.2, and 92.6% of oxalic acid was removed under the conditions of 2, 6, 10, 20, and 30 mM of the persulfate injection amount, and thus it could be seen that most of the oxalic acid was removed very quickly.

**[Table 19]**

| Reaction time (min) | Persulfate concentration (mM) | | | | |
|---|---|---|---|---|---|
| | 2 | 6 | 10 | 20 | 30 |
| 3 | 92.5 | 92.7 | 87.2 | 94.2 | 92.6 |
| 5 | 91.9 | 92.8 | 91.9 | 94.3 | 91.5 |
| 30 | 91.9 | 89.5 | 84.3 | 69.7 | 85.1 |
| 60 | 89.6 | 91.5 | 92.7 | 94.3 | 92.9 |
| 120 | 88.6 | 99.1 | 92.5 | 93.5 | 92.1 |

### Example 8 - pH adjustment with NaOH for 2 mM oxalic acid (copper)

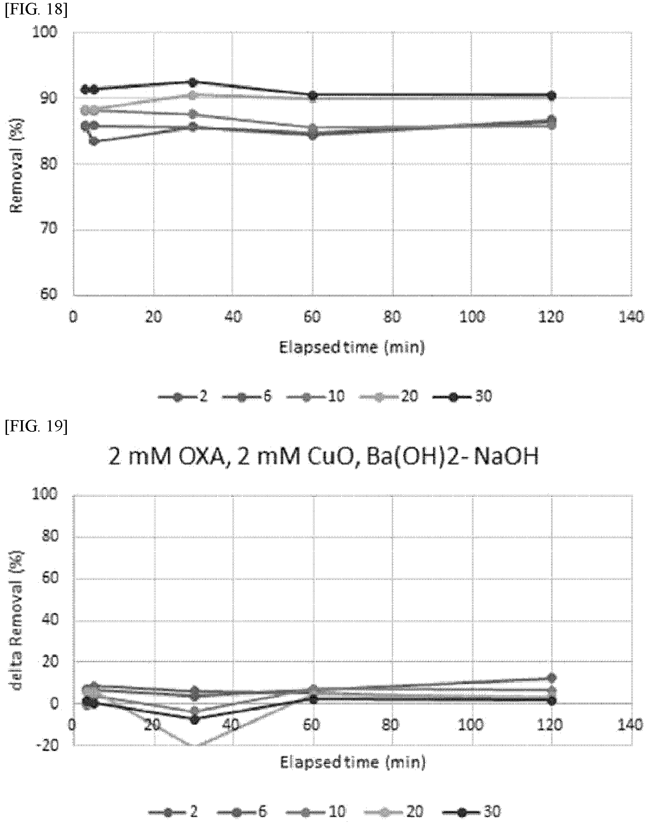

Even in the same manner as in Example 7, sodium hydroxide was used instead of barium hydroxide to analyze the treatment efficiency for oxalic acid, which was shown in FIG. 18 and Table 20 below.

As may be seen in Table 20 and FIG. 18 above, as the persulfate injection amount increased to 2, 6, 10, 20, and 30 mM, 86.4, 86.7, 85.8, 90.2, and 90.5% of oxalic acid was removed, and after 3 minutes of the reaction time, 85.7, 85.8, 88.1, 88.3, and 91.4% of oxalic acid was removed under the conditions of 2, 6, 10, 20, and 30 mM of the persulfate injection amount, and thus it could be seen that most of the oxalic acid was removed very quickly.

**[Table 20]**

| Reaction time (min) | Persulfate concentration (mM) | | | | |
|---|---|---|---|---|---|
| | 2 | 6 | 10 | 20 | 30 |
| 3 | 85.7 | 85.8 | 88.1 | 88.3 | 91.4 |
| 5 | 83.4 | 85.8 | 88.1 | 88.3 | 91.4 |
| 30 | 85.6 | 85.6 | 87.6 | 90.5 | 92.4 |
| 60 | 84.4 | 84.7 | 85.4 | 90.0 | 90.5 |
| 120 | 86.4 | 86.7 | 85.8 | 90.2 | 90.5 |

### Experimental Example 3 - Comparison of effects of barium hydroxide and sodium hydroxide for 2 mM oxalic acid

In order to determine a difference between a Ba(OH)₂ pH adjustment effect and a NaOH pH adjustment effect, the values in Table 20 were subtracted from the values in Table 19, and a wastewater degradation effect by the pH adjustment method was shown in Table 21 and FIG. 19.

As may be seen in Table 21 and FIG. 19 below, a difference between the two conditions was insignificant as 2.2, 12.4, 6.7, 3.3, and 1.6% as the persulfate injection amount increased to 2, 6, 10, 20, and 30 mM. After 3 minutes of reaction time, the difference was insignificant as 6.8, 6.9, -0.8, 5.9, and 1.3% under the conditions of 2, 6, 10, 20, and 30 mM of persulfate injection amount, which indicated that a difference due to pH adjustment was insignificant.

**[Table 21]**

| Reaction time (min) | Persulfate concentration (mM) | | | | |
|---|---|---|---|---|---|
| | 2 | 6 | 10 | 20 | 30 |
| 3 | 6.8 | 6.9 | -0.8 | 5.9 | 1.3 |
| 5 | 8.5 | 7.0 | 3.8 | 6.0 | 0.2 |
| 30 | 6.3 | 3.9 | -3.3 | -20.8 | -7.3 |
| 60 | 5.2 | 6.7 | 7.2 | 4.3 | 2.4 |
| 120 | 2.2 | 12.4 | 6.7 | 3.3 | 1.6 |

### Example 9 - pH adjustment with Ba(OH)₂ for 10 mM oxalic acid (nickel)

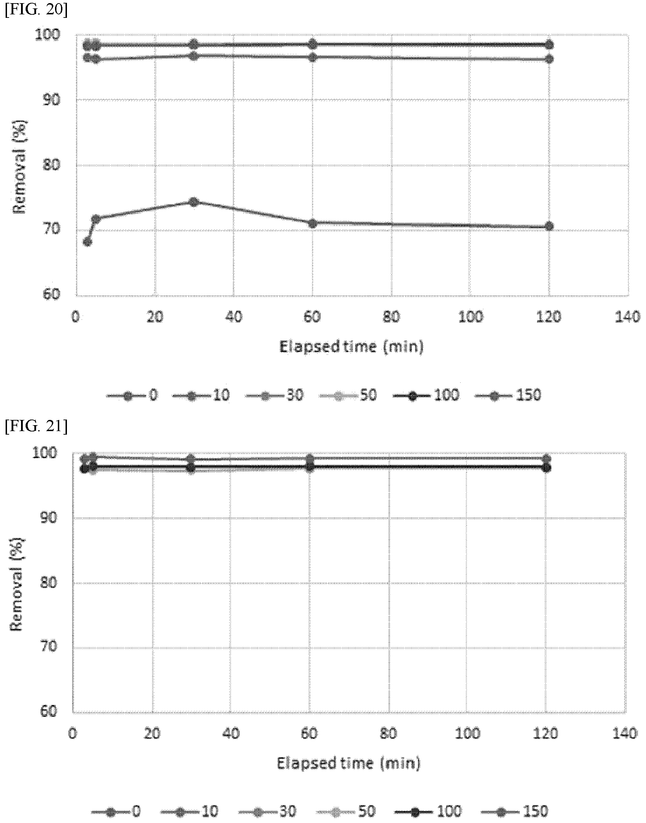

In order to treat oxalic acid, which was used as an organic acid and a complexing agent in a nuclear decontamination process, nickel, alkali, and persulfate were injected, and the oxalic acid concentration used in the experiment was prepared at 10 mM according to a concentration present in a decontamination waste solution. The alkali was adjusted to pH 12 by injecting Ba(OH)₂. Thereafter, nickel was prepared at 0.625 M using nickel sulfate and then injected to reach 10 mM, which was the concentration present in the decontamination waste solution. Thereafter, the persulfate was injected to 0, 10, 20, 30, 50, 100, and 150 mM, and the oxalic acid treatment effect was confirmed over time. The oxalic acid treatment effect by nickel, alkali, and persulfate at pH 12 was confirmed by measuring TOC to completely remove organic carbon, and the oxalic acid concentration and treatment efficiency (%) were calculated by subtracting the TOC concentration of the oxalic acid remaining after treatment, which were shown in Table 22 and FIG. 20 below. As may be seen in Table 22 and FIG. 20 above, as the persulfate injection amount increased to 0, 10, 30, 50, 100, and 150 mM, 70.5, 96.3, 98.4, 98.5, 98, and 98.5% of oxalic acid was removed, and after 3 minutes of the reaction time, 68.3, 96.7, 98.6, 98.7, 98.3, and 98.3% of oxalic acid was removed under the conditions of 10, 30, 50, 100, and 150 mM of the persulfate injection amount, and thus it may be seen that most of the oxalic acid was removed very quickly.

**[Table 22]**

| Reaction time (min) | Persulfate concentration (mM) | | | | | |
|---|---|---|---|---|---|---|
| | 0 | 10 | 30 | 50 | 100 | 150 |
| 3 | 68.3 | 96.7 | 98.6 | 98.7 | 98.3 | 98.3 |
| 5 | 71.7 | 96.2 | 98.7 | 98.7 | 98.4 | 98.3 |
| 30 | 74.4 | 96.8 | 98.5 | 98.6 | 98.4 | 98.4 |
| 60 | 71.1 | 96.6 | 98.6 | 98.6 | 98.6 | 98.5 |
| 120 | 70.5 | 96.3 | 98.4 | 98.5 | 98.6 | 98.5 |

### Example 10 - pH adjustment with NaOH for 10 mM oxalic acid (nickel)

Even in the same manner as in Example 9, sodium hydroxide was used instead of barium hydroxide to analyze the treatment efficiency for oxalic acid, which was shown in FIG. 21 and Table 23 below.

As may be seen in FIG. 21 and Table 23 above, as the persulfate injection amount increased to 0, 10, 30, 50, 100, and 150 mM, 3.9, 3.7, 6.9, 97.7, 97.9, and 99.2% of oxalic acid was removed, and after 3 minutes of the reaction time, 4.1, 4.5, 40.5, 97.7, 97.7, and 99.2% of oxalic acid was removed under the conditions of 0, 10, 30, 50, 100, and 150 mM of the persulfate injection amount, and thus it may be seen that most of the oxalic acid was removed very quickly.

**[Table 23]**

| Reaction time (min) | Persulfate concentration (mM) | | | | | |
|---|---|---|---|---|---|---|
| | 0 | 10 | 30 | 50 | 100 | 150 |
| 3 | 4.1 | 4.5 | 40.5 | 97.7 | 97.7 | 99.2 |
| 5 | 3.8 | 4.8 | 34.3 | 97.5 | 98.0 | 99.4 |
| 30 | 4.7 | 5.0 | 13.7 | 97.4 | 97.9 | 99.1 |
| 60 | 4.5 | 2.5 | 8.1 | 97.7 | 98.0 | 99.2 |
| 120 | 3.9 | 3.7 | 6.9 | 97.7 | 97.9 | 99.2 |

### Experimental Example 4 - Comparison of effects of barium hydroxide and sodium hydroxide for 10 mM oxalic acid

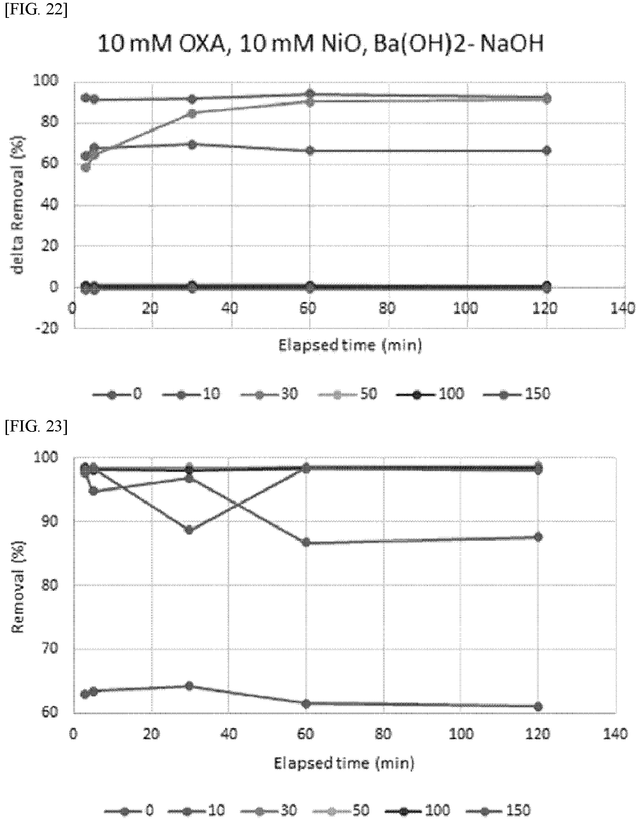

In order to determine a difference between a Ba(OH)₂ pH adjustment effect and a NaOH pH adjustment effect, the values in Table 19 were subtracted from the values in Table 18, and a wastewater degradation effect by the pH adjustment method was shown in Table 24 and FIG. 22.

As may be seen in Table 24 and FIG. 22 below, a difference between the two conditions was large as 66.6, 92.6, 91.5, 0.8, 0.7, and -0.7% under the persulfate injection conditions of 0 to 30 mM as the persulfate injection amount increased to 0, 10, 30, 50, 100, and 150 mM. After 3 minutes of the reaction time, under the conditions of 0, 10, 30, 50, 100, and 150 mM of persulfate injection amount, the difference was large as 64.2, 92.2, 58.1, 1.0, 0.6, and -0.9%, under the persulfate injection conditions of 0 to 30 mM.

**[Table 24]**

| Reaction time (min) | Persulfate concentration (mM) | | | | | |
|---|---|---|---|---|---|---|
| | 0 | 10 | 30 | 50 | 100 | 150 |
| 3 | 64.2 | 92.2 | 58.1 | 1.0 | 0.6 | -0.9 |
| 5 | 67.9 | 91.4 | 64.4 | 1.2 | 0.4 | -1.1 |
| 30 | 69.7 | 91.8 | 84.8 | 1.2 | 0.5 | -0.7 |
| 60 | 66.6 | 94.1 | 90.5 | 0.9 | 0.6 | -0.7 |
| 120 | 66.6 | 92.6 | 91.5 | 0.8 | 0.7 | -0.7 |

### Example 11 - pH adjustment with Ba(OH)₂ for 10 mM oxalic acid (copper)

In order to treat oxalic acid, which was used as an organic acid and a complexing agent in a nuclear decontamination process, copper, alkali, and persulfate were injected, and the oxalic acid concentration used in the experiment was prepared at 10 mM according to a concentration present in a decontamination waste solution. The alkali was adjusted to pH 12 by injecting Ba(OH)₂. Thereafter, copper was prepared at 0.625 M using copper sulfate and then injected to reach 10 mM, which was the concentration present in the decontamination waste solution. Thereafter, the copper was injected to 0, 10, 30, 50, 100, and 150 mM, and the oxalic acid treatment effect was confirmed over time. The oxalic acid treatment effect by copper, alkali, and persulfate at pH 12 was confirmed by measuring TOC to completely remove organic carbon, and the oxalic acid concentration and treatment efficiency (%) were calculated by subtracting the TOC concentration of the oxalic acid remaining after treatment, which were shown in Table 25 and FIG. 23 below. As may be seen in Table 25 and FIG. 23 above, as the persulfate injection amount increased to 0, 10, 30, 50, 100, and 150 mM, 61.1, 87.6, 98.6, 98.5, 98.3, and 98.0% of oxalic acid was removed, and after 3 minutes of the reaction time, 63.0, 97.6, 98.1, 98.4, 98.6, and 98.2% of oxalic acid was removed under the conditions of 0, 10, 30, 50, 100, and 150 mM of the persulfate injection amount, and thus it may be seen that most of the oxalic acid was removed very quickly.

**[Table 25]**

| Reaction time (min) | Persulfate concentration (mM) | | | | | |
|---|---|---|---|---|---|---|
| | 0 | 10 | 30 | 50 | 100 | 150 |
| 3 | 63.0 | 97.6 | 98.1 | 98.4 | 98.6 | 98.2 |
| 5 | 63.5 | 94.7 | 98.5 | 98.1 | 98.2 | 98.3 |
| 30 | 64.3 | 96.8 | 98.4 | 98.2 | 98.0 | 88.6 |
| 60 | 61.6 | 86.7 | 98.5 | 98.2 | 98.3 | 98.3 |
| 120 | 61.1 | 87.6 | 98.6 | 98.5 | 98.3 | 98.0 |

### Example 12 - pH adjustment with NaOH for 10 mM oxalic acid (copper)

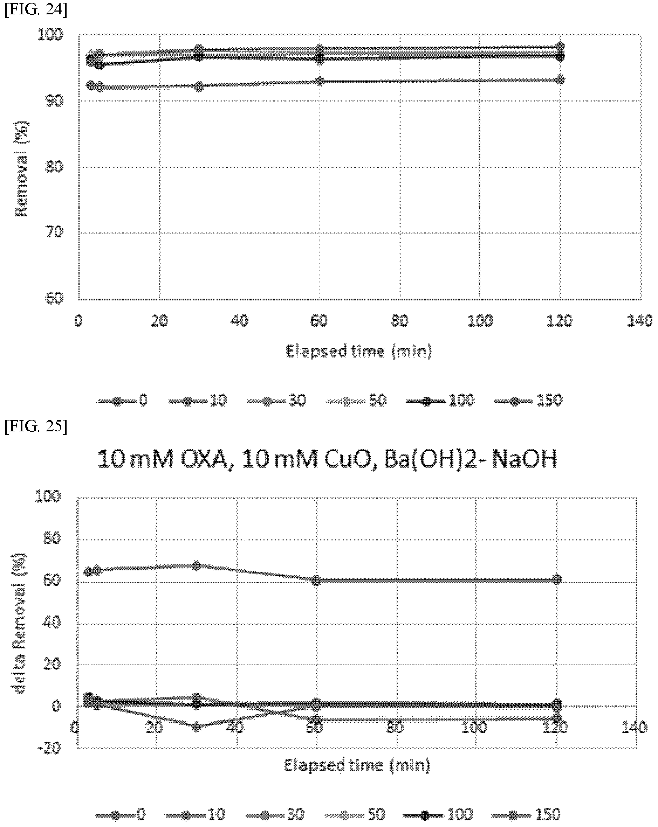

Even in the same manner as in Example 11, sodium hydroxide was used instead of barium hydroxide to analyze the treatment efficiency for oxalic acid, which was shown in FIG. 24 and Table 26 below.

As may be seen in FIG. 24 and Table 26 above, as the persulfate injection amount increased to 0, 10, 30, 50, 100, and 150 mM, 0.3, 93.3, 97.3, 97.2, 96.8, and 98.3% of oxalic acid was removed, and after 3 minutes of the reaction time, -1.8, 92.4, 96.9, 97.0, 96.2, and 95.6% of oxalic acid was removed under the conditions of 0, 10, 30, 50, 100, and 150 mM of the persulfate injection amount, and thus it may be seen that most of the oxalic acid was removed very quickly.

**[Table 26]**

| Reaction time (min) | Persulfate concentration (mM) | | | | | |
|---|---|---|---|---|---|---|
| | 0 | 10 | 30 | 50 | 100 | 150 |
| 3 | -1.8 | 92.4 | 96.9 | 97.0 | 96.2 | 95.9 |
| 5 | -2.1 | 92.2 | 96.9 | 96.8 | 95.6 | 97.2 |
| 30 | -3.2 | 92.2 | 97.1 | 97.1 | 96.7 | 97.9 |
| 60 | 0.8 | 93.0 | 97.2 | 96.2 | 96.5 | 97.9 |
| 120 | 0.3 | 93.3 | 97.3 | 97.2 | 96.8 | 98.3 |

### Experimental Example 5 - Comparison of effects of barium hydroxide and sodium hydroxide for 10 mM oxalic acid

In order to determine a difference between a Ba(OH)₂ pH adjustment effect and a NaOH pH adjustment effect, the values in Table 22 were subtracted from the values in Table 21, and a wastewater degradation effect by the pH adjustment method was shown in Table 27 and FIG. 25.

As may be seen in Table 27 and FIG. 25 below, a difference between the two conditions was very large as 60.8, -5.7, 1.4, 1.3, 1.5, and -0.3% in the case of 0 mM persulfate as the persulfate injection amount increased to 0, 10, 30, 50, 100, and 150 mM, and thus the Ba(OH)₂ pH adjustment effect was higher. After 3 minutes of the reaction time, under the conditions of 0, 10, 30, 50, 100, and 150 mM of persulfate injection amount, the difference was very large as 64.8, 5.2, 1.3, 1.4, 2.3, and 2.3% in the case of 0 mM persulfate.

**[Table 27]**

| Reaction time (min) | Persulfate concentration (mM) | | | | | |
|---|---|---|---|---|---|---|
| | 0 | 10 | 30 | 50 | 100 | 150 |
| 3 | 64.8 | 5.2 | 1.3 | 1.4 | 2.3 | 2.3 |
| 5 | 65.6 | 2.6 | 1.6 | 1.3 | 2.6 | 1.2 |
| 30 | 67.5 | 4.6 | 1.3 | 1.2 | 1.4 | -9.2 |
| 60 | 60.8 | -6.3 | 1.3 | 2.0 | 1.8 | 0.4 |
| 120 | 60.8 | -5.7 | 1.4 | 1.3 | 1.5 | -0.3 |

### Example 13 - pH adjustment with Ba(OH)₂ for 20 mM oxalic acid (nickel)

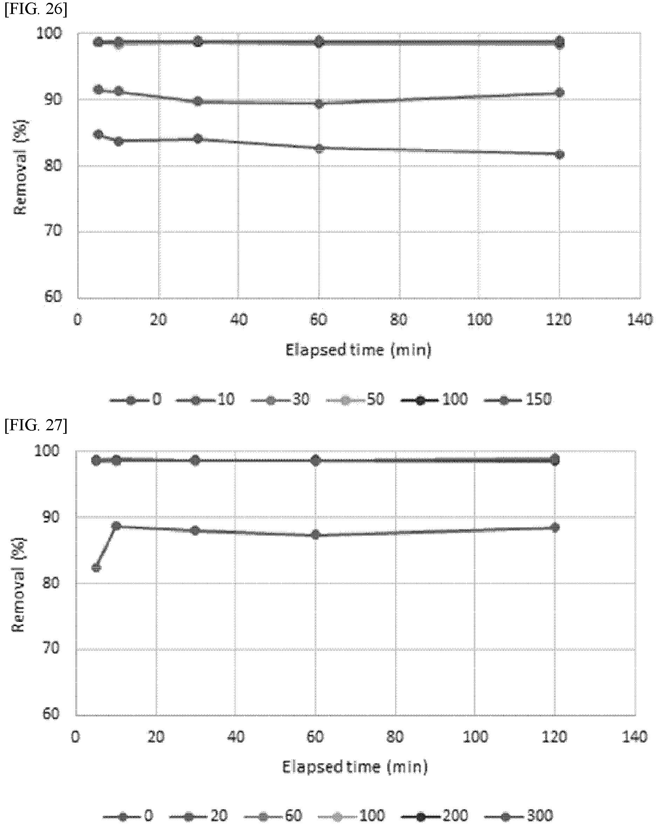

In order to treat oxalic acid, which was used as an organic acid and a complexing agent in a nuclear decontamination process, nickel, alkali, and persulfate were injected, and the oxalic acid concentration used in the experiment was prepared at 20 mM according to a concentration present in a decontamination waste solution. The alkali was adjusted to pH 12 by injecting Ba(OH)₂. Thereafter, nickel was prepared at 0.625 M using nickel sulfate and then injected to reach 20 mM, which was the concentration present in the decontamination waste solution. Thereafter, the persulfate was injected to 0, 20, 60, 100, 200, and 300 mM, and the oxalic acid treatment effect was confirmed over time. The oxalic acid treatment effect by nickel, alkali, and persulfate at pH 12 was confirmed by measuring TOC to completely remove organic carbon, and the oxalic acid concentration and treatment efficiency (%) were calculated by subtracting the TOC concentration of the oxalic acid remaining after treatment, which were shown in Table 28 and FIG. 26 below. As may be seen in Table 28 and FIG. 26 above, as the persulfate injection amount increased to 0, 20, 60, 100, 200, and 300 mM, 81.8, 91.0, 98.3, 98.7, 98.8, and 98.8% of oxalic acid was removed, and after 5 minutes of the reaction time, 84.7, 91.4, 98.8, 98.6, 98.7, and 98.7% of oxalic acid was removed under the conditions of 0, 20, 60, 100, 200, and 300 mM of the persulfate injection amount, and thus it could be seen that most of the oxalic acid was removed very quickly.

**[Table 28]**

| Reaction time (min) | Persulfate concentration (mM) | | | | | |
|---|---|---|---|---|---|---|
| | 0 | 20 | 60 | 100 | 200 | 300 |
| 5 | 84.7 | 91.4 | 98.8 | 98.6 | 98.7 | 98.7 |
| 10 | 83.8 | 91.3 | 98.8 | 98.4 | 98.8 | 98.8 |
| 30 | 84.1 | 89.8 | 98.7 | 98.6 | 98.8 | 98.9 |
| 60 | 82.7 | 89.5 | 98.5 | 98.9 | 98.7 | 98.8 |
| 120 | 81.8 | 91.0 | 98.3 | 98.7 | 98.8 | 98.8 |

### Example 14 - pH adjustment with NaOH for 20 mM oxalic acid (nickel)

Even in the same manner as in Example 13, sodium hydroxide was used instead of barium hydroxide to analyze the treatment efficiency for oxalic acid, which was shown in FIG. 27 and Table 29 below.

As may be seen in FIG. 27 and Table 29 above, as the persulfate injection amount increased to 0, 20, 60, 100, 200, and 300 mM, -2.4, 88.4, 98.5, 98.8, 98.7, and 98.8% of oxalic acid was removed, and after 5 minutes of the reaction time, 1.7, 82.3, 98.4, 98.7, 98.7, and 98.7% of oxalic acid was removed under the conditions of 0, 20, 60, 100, 200, and 300 mM of the persulfate injection amount, and thus it may be seen that most of the oxalic acid was removed very quickly.

**[Table 29]**

| Reaction time (min) | Persulfate concentration (mM) | | | | | |
|---|---|---|---|---|---|---|
| | 0 | 20 | 60 | 100 | 200 | 300 |
| 5 | 1.7 | 82.3 | 98.4 | 98.7 | 98.7 | 98.7 |
| 10 | 1.0 | 88.6 | 98.6 | 98.6 | 98.7 | 98.7 |
| 30 | 0.2 | 88.0 | 98.6 | 98.6 | 98.7 | 98.6 |
| 60 | -0.5 | 87.4 | 98.6 | 98.6 | 98.7 | 98.6 |
| 120 | -2.4 | 88.4 | 98.5 | 98.8 | 98.7 | 98.8 |

### Experimental Example 6 - Comparison of effects of barium hydroxide and sodium hydroxide for 20 mM oxalic acid

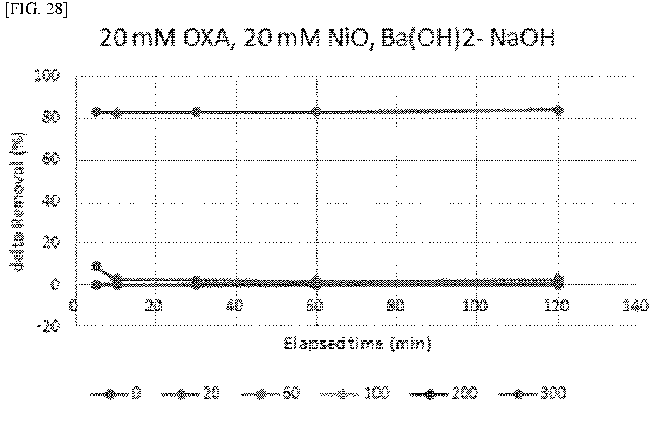

In order to determine a difference between a Ba(OH)₂ pH adjustment effect and a NaOH pH adjustment effect, the values in Table 25 were subtracted from the values in Table 24, and a wastewater degradation effect by the pH adjustment method was shown in Table 30 and FIG. 28.

As may be seen in Table 30 and FIG. 28 below, a difference between the two conditions was large as 84.2, 2.6, -0.2, -0.1, 0.1, and 0.0% under the injection conditions of 0 mM persulfate as the persulfate injection amount increased to 0, 20, 60, 100, 200, and 300 mM. After 5 minutes of the reaction time, under the conditions of 0, 20, 60, 100, 200, and 300 mM of persulfate injection amount, the difference was large as 83.0, 9.1, 0.4, -0.1, 0.0, and 0.0% under the injection conditions of 0 mM persulfate.

**[Table 30]**

| Reaction time (min) | Persulfate concentration (mM) | | | | | |
|---|---|---|---|---|---|---|
| | 0 | 20 | 60 | 100 | 200 | 300 |
| 5 | 83.0 | 9.1 | 0.4 | -0.1 | 0.0 | 0.0 |
| 10 | 82.8 | 2.7 | 0.2 | -0.2 | 0.1 | 0.1 |
| 30 | 83.0 | 2.4 | 0.0 | 0.0 | 0.1 | 0.2 |
| 60 | 83.2 | 2.1 | -0.1 | 0.3 | 0.0 | 0.3 |
| 120 | 84.2 | 2.6 | -0.2 | -0.1 | 0.1 | 0.0 |

### Example 15 - pH adjustment with Ba(OH)₂ for 20 mM oxalic acid (copper)

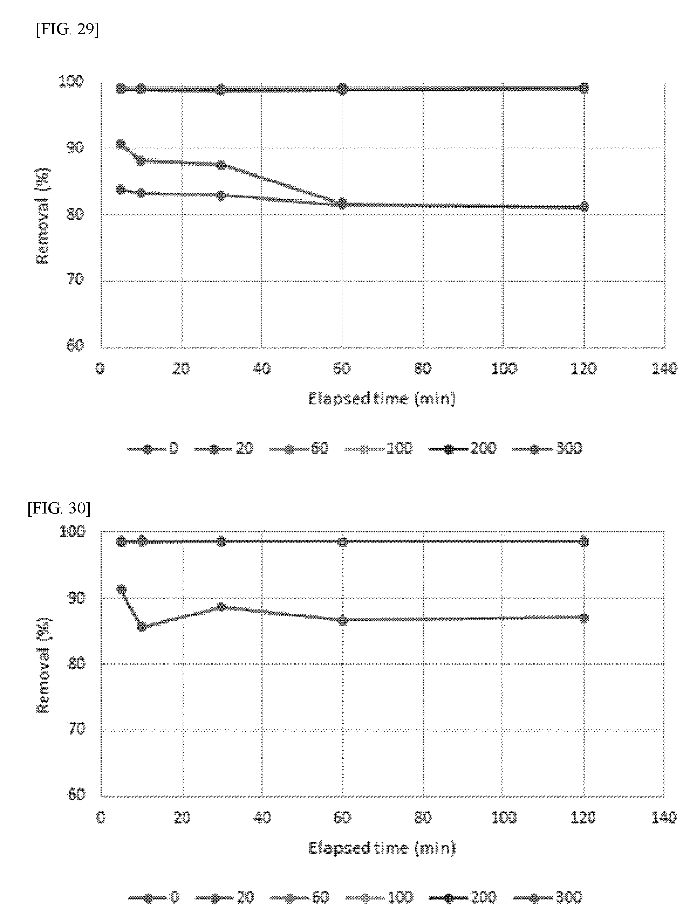

In order to treat oxalic acid, which was used as an organic acid and a complexing agent in a nuclear decontamination process, copper, alkali, and persulfate were injected, and the oxalic acid concentration used in the experiment was prepared at 20 mM according to a concentration present in a decontamination waste solution. The alkali was adjusted to pH 12 by injecting Ba(OH)₂. Thereafter, copper was prepared at 0.625 M using copper sulfate and then injected to reach 20 mM, which was the concentration present in the decontamination waste solution. Thereafter, the persulfate was injected to 0, 20, 60, 100, 200, and 300 mM, and the oxalic acid treatment effect was confirmed over time. The oxalic acid treatment effect by copper, alkali, and persulfate at pH 12 was confirmed by measuring TOC to completely remove organic carbon, and the oxalic acid concentration and treatment efficiency (%) were calculated by subtracting the TOC concentration of the oxalic acid remaining after treatment, which were shown in Table 31 and FIG. 29 below. As may be seen in Table 31 and FIG. 29 above, as the persulfate injection amount increased to 0, 20, 60, 100, 200, and 300 mM, 81.3, 81.1, 98.9, 99.0, 99.1, and 99.0% of oxalic acid was removed, and after 5 minutes of the reaction time, 83.7, 90.7, 99.0, 99.1, 98.9, and 98.9% of oxalic acid was removed under the conditions of 0, 20, 60, 100, 200, and 300 mM of the persulfate injection amount, and thus it could be seen that most of the oxalic acid was removed very quickly.

**[Table 31]**

| Reaction time (min) | Persulfate concentration (mM) | | | | | |
|---|---|---|---|---|---|---|
| | 0 | 20 | 60 | 100 | 200 | 300 |
| 5 | 83.7 | 90.7 | 99.0 | 99.1 | 98.9 | 98.9 |
| 10 | 83.2 | 88.1 | 98.9 | 99.0 | 98.9 | 98.9 |
| 30 | 82.9 | 87.5 | 98.9 | 99.0 | 98.8 | 98.6 |
| 60 | 81.4 | 81.7 | 98.9 | 99.1 | 98.9 | 98.8 |
| 120 | 81.3 | 81.1 | 98.9 | 99.0 | 99.1 | 99.0 |

### Example 16 - pH adjustment with NaOH for 20 mM oxalic acid (copper)

The treatment efficiency for oxalic acid was analyzed using sodium hydroxide instead of barium hydroxide, and the results were shown in FIG. 30 and Table 32.

As may be seen in FIG. 30 and Table 32 above, as the persulfate injection amount increased to 0, 20, 60, 100, 200, and 300 mM, -1.1, 87.0, 98.6, 98.5, 98.6, and 98.6% of oxalic acid was removed, and after 5 minutes of the reaction time, 1.2, 91.3, 98.4, 98.5, 98.6, and 98.7% of oxalic acid was removed under the conditions of 0, 20, 60, 100, 200, and 300 mM of the persulfate injection amount, and thus it may be seen that most of the oxalic acid was removed very quickly.

**[Table 32]**

| Reaction time (min) | Persulfate concentration (mM) | | | | | |
|---|---|---|---|---|---|---|
| | 0 | 20 | 60 | 100 | 200 | 300 |
| 5 | 1.2 | 91.3 | 98.4 | 98.5 | 98.6 | 98.7 |
| 10 | 1.3 | 85.6 | 98.4 | 98.6 | 98.7 | 98.6 |
| 30 | 1.6 | 88.7 | 98.6 | 98.6 | 98.6 | 98.5 |
| 60 | -0.5 | 86.6 | 98.5 | 98.6 | 98.5 | 98.6 |
| 120 | -1.1 | 87.0 | 98.6 | 98.5 | 98.6 | 98.6 |

### Experimental Example 7 - Comparison of effects of barium hydroxide and sodium hydroxide for 20 mM oxalic acid

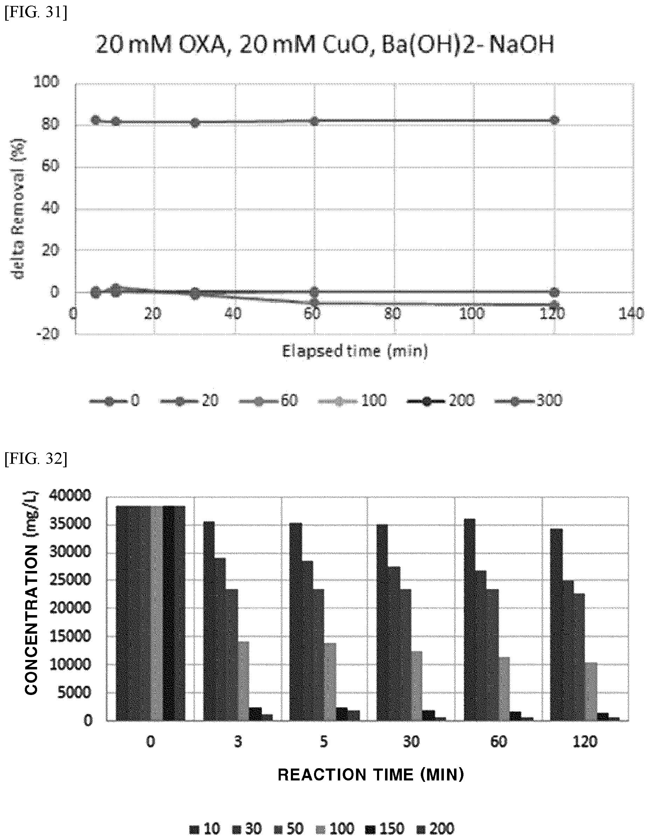

In order to determine a difference between a Ba(OH)₂ pH adjustment effect and a NaOH pH adjustment effect, the values in Table 28 were subtracted from the values in Table 27, and a wastewater degradation effect by the pH adjustment method was shown in Table 33 and FIG. 31.

As may be seen in Table 33 and FIG. 31 below, a difference between the two conditions was very large as 82.4, -6.0, 0.3, 0.5, 0.5, and 0.4% in the case of 0 mM persulfate as the persulfate injection amount increased to 0, 20, 60, 100, 200, and 300 mM, and thus the Ba(OH)₂ pH adjustment effect was higher. After 5 minutes of the reaction time, under the conditions of 0, 20, 60, 100, 200, and 300 mM of persulfate injection amount, the difference was very large as 82.5, -0.6, 0.6, 0.6, 0.3, and 0.2% in the case of 0 mM persulfate.

**[Table 33]**

| Reaction time (min) | Persulfate concentration (mM) | | | | | |
|---|---|---|---|---|---|---|
| | 0 | 20 | 60 | 100 | 200 | 300 |
| 5 | 82.5 | -0.6 | 0.6 | 0.6 | 0.3 | 0.2 |
| 10 | 81.9 | 2.5 | 0.5 | 0.4 | 0.2 | 0.2 |
| 30 | 81.3 | -1.2 | 0.3 | 0.4 | 0.2 | 0.1 |
| 60 | 82.0 | -4.9 | 0.3 | 0.5 | 0.4 | 0.3 |
| 120 | 82.4 | -6.0 | 0.3 | 0.5 | 0.5 | 0.4 |

### Example 17

An experiment was conducted in advance to confirm that the oxidation value of the metal oxide according to the present disclosure was a reaction in which persulfate was oxidized. That is, since the persulfate became sulfuric acid radicals or hydroxyl radicals at alkaline pH, this experiment was conducted to show that the present disclosure was a result of oxidation of the metal oxide, not a radical reaction.

To this end, 10 mM copper oxide and 10 mM nickel oxide were used in the liquid scintillation counter waste solution prepared under the condition of pH 12, respectively, and the concentration of persulfate was 150 mM. Here, sufficient radical scavenger concentrations of TBA 2000 mM and MeOH 2000 mM were added to compare the oxalic acid degradation performance, which was shown in Table 34 and FIG. 32.

**[Table 34]**

| Reaction time (min) | 10 mM nickel oxide + 150 mM persulfate | 10 mM nickel oxide + 150 mM persulfate + 2000 mM TBA | 10 mM nickel oxide + 150 mM persulfate + 2000 mM MeOH | 10 mM nickel oxide + 150 mM persulfate + 2000 mM TBA + 2000 mM MeOH |
|---|---|---|---|---|
| 3 | 93.7 | 92.7 | 93.4 | 93.2 |
| 5 | 93.6 | 92.8 | 92.4 | 94.5 |
| 30 | 94.7 | 93.5 | 91.2 | 94.3 |
| 60 | 95.7 | 96.2 | 95.4 | 96.8 |
| 120 | 96.2 | 97.3 | 95.6 | 97.2 |

In order to treat the liquid scintillation counter waste solution used in a liquid scintillation counter in a nuclear power plant operation process, nickel, alkali, and persulfate were injected, and a mixture of liquid scintillation materials (CarboSorb and Permafluor E+ from PerkinElmer were mixed and used at 1:1) used in the experiment was mixed and diluted to be prepared.

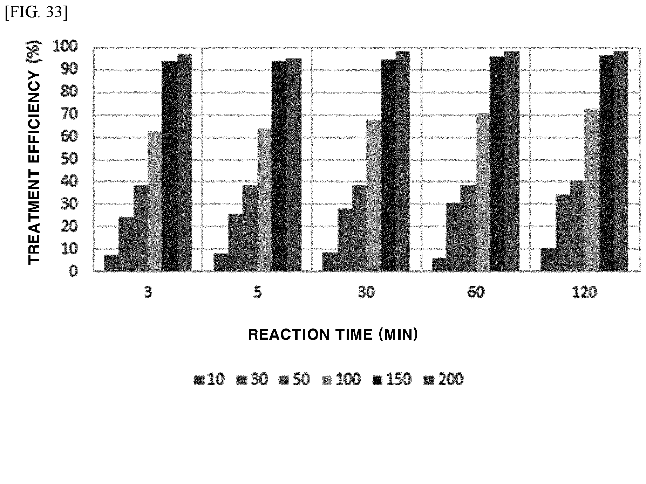

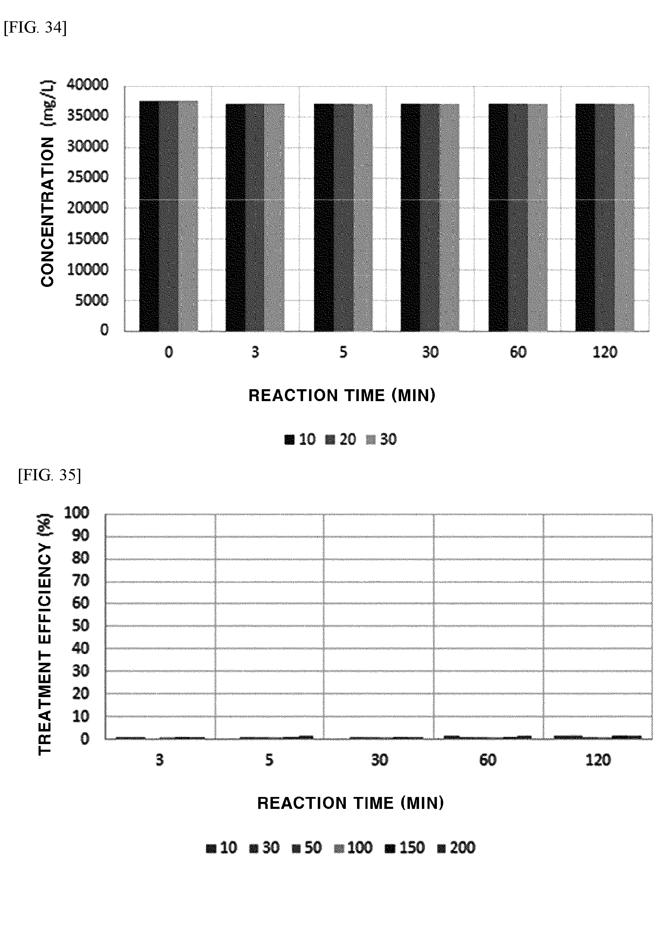

The alkali was adjusted to pH 12 using 2.5 M NaOH. Thereafter, nickel was prepared at 0.625 M using nickel sulfate and then injected to reach 10 mM. Thereafter, the persulfate was injected to 10, 30, 50, 100, 150, and 200 mM, and the TOC treatment effect was confirmed over time. The wastewater treatment effect by nickel, alkali, and persulfate at pH 12 was confirmed by measuring TOC to completely remove organic carbon, and the waste solution concentration and treatment efficiency (%) were calculated by subtracting the TOC concentration of the waste solution remaining after treatment, which were shown in FIGS. 33 and 34 and Table 35.

As may be seen in FIGS. 33 and 34 and Table 35, as the persulfate injection amount increased to 10, 30, 50, 100, 150, and 200 mM, after 3 minutes of the reaction time, the organic matter was removed to 7.5, 24.3, 38.9, 62.8, 93.7, and 97.1%, and after 120 minutes of the reaction time, the organic matter was removed to 10.8, 34.6, 40.4, 72.7, 96.2, and 98.4%, and thus it could be seen that most of organic matter was very rapidly removed within 3 minutes of the reaction time.

**[Table 35]**

| Reaction time (min) | Persulfate concentration (mM) | | | | | |
|---|---|---|---|---|---|---|
| | 10 | 30 | 50 | 100 | 150 | 200 |
| 3 | 7.5 | 24.3 | 38.9 | 62.8 | 93.7 | 97.1 |
| 5 | 8.1 | 25.8 | 38.6 | 63.6 | 93.6 | 94.8 |
| 30 | 8.5 | 28.3 | 39.0 | 67.3 | 94.7 | 98.0 |
| 60 | 6.2 | 30.5 | 38.5 | 70.4 | 95.7 | 98.1 |
| 120 | 10.8 | 34.6 | 40.4 | 72.7 | 96.2 | 98.4 |

### Comparative Example 8

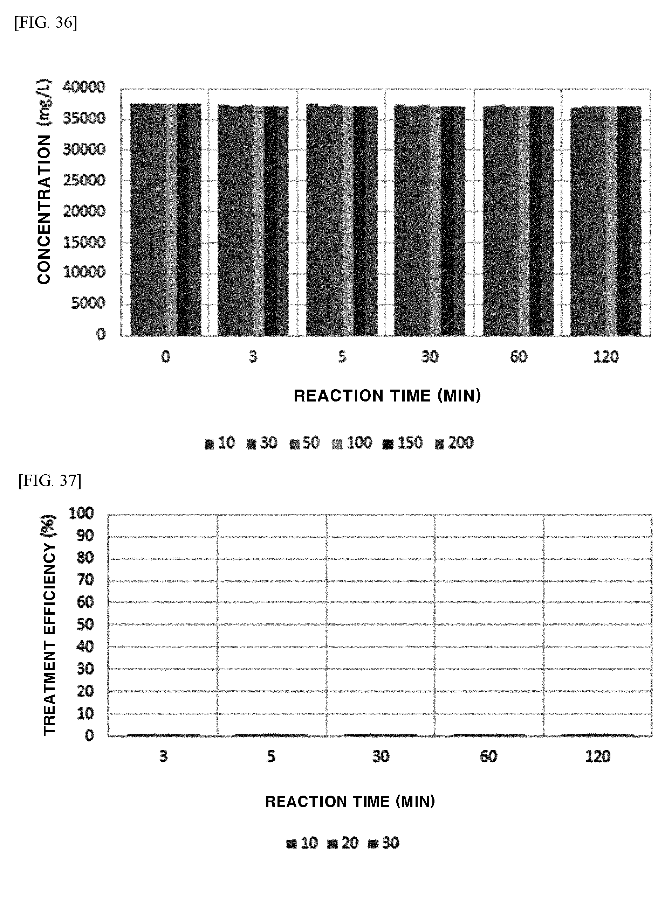

In order to confirm an effect by injection of nickel oxide and persulfate under very high alkaline conditions of pH 12, the pH was adjusted to 12 using 2.5 M NaOH, and then the liquid scintillation counter waste solution treatment effect was confirmed in the case of injecting only nickel without persulfate and in the case of injecting only persulfate without nickel. In the case of injecting only nickel without persulfate, after preparing the waste solution, nickel was prepared at 0.625 M using nickel sulfate and injected to 10, 20, and 30 mM. Thereafter, the waste solution treatment effect over time was confirmed, which was shown in FIGS. 35 and 36 and Table 36.

In the case where only nickel was injected to 10, 20, and 30 mM without persulfate, the waste solution treatment effect over time may be seen. That is, the waste solution treatment effect was confirmed by measuring TOC to completely remove organic carbon, and as maybe seen in FIGS. 35 and 36 by subtracting the TOC concentration of the waste solution remaining after treatment, in the case of injecting only nickel without persulfate, as the nickel injection amount increased to 10, 20, and 30 mM, the organic matter was removed to 1.2, 1.1, and 1.3% at a reaction time of 120 minutes, which was almost not removed.

In addition, in the case of injecting only persulfate without nickel, as the persulfate injection amount increased to 10, 30, 50, 100, 150, and 200 mM, the organic matter was removed to 1.8, 1.5, 1.2, 1.3, 1.5, and 1.4% at a reaction time of 120 minutes as shown in FIGS. 35 and 36 and Table 37, which was almost not removed.

**[Table 36]**

| Reaction time (min) | Nickel concentration (mM) | | |
|---|---|---|---|
| | 10 | 20 | 30 |
| 3 | 1.1 | 1.2 | 1.1 |
| 5 | 1.0 | 1.3 | 1.2 |
| 30 | 1.1 | 1.1 | 1.1 |
| 60 | 1.3 | 0.9 | 1.1 |
| 120 | 1.2 | 1.1 | 1.3 |

**[Table 37]**

| Reaction time (min) | Persulfate concentration (mM) | | | | | |
|---|---|---|---|---|---|---|
| | 10 | 30 | 50 | 100 | 150 | 200 |
| 3 | 0.9 | 1.0 | 0.5 | 1.1 | 1.1 | 1.2 |
| 5 | 0.2 | 1.1 | 0.9 | 1.2 | 1.2 | 1.5 |
| 30 | 0.7 | 1.1 | 0.8 | 1.3 | 1.2 | 1.3 |
| 60 | 1.5 | 0.9 | 1.1 | 1.1 | 1.2 | 1.4 |
| 120 | 1.8 | 1.5 | 1.2 | 1.3 | 1.5 | 1.4 |

### Comparative Example 9

For comparison with Example, iron, acid, and gamma rays were irradiated, and a mixture of liquid scintillation materials (CarboSorb and Permafluor E+ from PerkinElmer were mixed and used at 1:1) used in the experiment was mixed and diluted to be prepared. The acid was adjusted to pH 3 using 0.1 N HNO₃.

Fe²⁺ was added to the prepared liquid scintillation counter waste solution as a metal ion to be 1 mM, N₂O was injected at a rate of 0.1 MPa/10 mL for 20 minutes, and persulfate was added to be 1 mM as an oxidizer to conduct the experiment. Gamma rays were irradiated at a dose rate of 10 kGy/hr, and gamma-ray irradiation doses of 5, 10, and 30 kGy were irradiated for 30, 60, and 180 minutes.

Specifically, the experiment was conducted in a batch where only metal ions were added to the liquid scintillation counter waste solution, a batch where an oxidizer and nitrous oxide were added to the liquid scintillation counter waste solution, and a batch where metal ions, an oxidizer, and nitrous oxide were added to the liquid scintillation counter waste solution. The treatment efficiency (%) of the liquid scintillation counter waste solution was calculated by subtracting the TOC concentration after irradiation from the TOC concentration of the liquid scintillation counter waste solution before irradiation, which was shown in FIG. 37 and Table 38.

When the gamma-ray irradiation doses were 5, 10, and 30 kGy (30, 60, and 180 minutes), the treatment efficiencies of the batch added with only metal ions were 3.7%, 6.6%, and 14.2%, respectively, the treatment efficiencies of the batch added with the oxidizer and nitrous oxide to the liquid scintillation counter waste solution were 6%, 18.4%, and 37.1%, respectively, and the treatment efficiencies of the batch added with metal ions, the oxidizer, and nitrous oxide to the liquid scintillation counter waste solution were 22.1%, 34.6%, and 73.9%, respectively.

**[Table 38]**

| Reaction time (min) | Treatment condition | | | |
|---|---|---|---|---|
| | Gamma rays only | Gamma rays + Fe²⁺ | Gamma rays + persulfate + N₂O | Gamma rays + Fe²⁺ + persulfate + N₂O |
| 30 | 9.0 | 3.7 | 6.0 | 22.2 |
| 60 | 10.7 | 6.6 | 18.4 | 34.6 |
| 180 | 18.1 | 14.4 | 37.1 | 73.9 |

### Comparative Example 10

For comparison with Example, copper, neutral, and gamma rays were irradiated, and a mixture of liquid scintillation materials (CarboSorb and Permafluor E+ from PerkinElmer were mixed and used at 1:1) used in the experiment was mixed and diluted to be prepared. Cu²⁺ was added to the prepared liquid scintillation counter waste solution as a metal ion to be 1 mM, N₂O was injected at a rate of 0.1 MPa/10 mL for 20 minutes, and persulfate was added to be 1 mM as an oxidizer to conduct the experiment. Gamma rays were irradiated at a dose rate of 10 kGy/hr, and gamma-ray irradiation doses of 5, 10, and 30 kGy were irradiated for 30, 60, and 180 minutes.

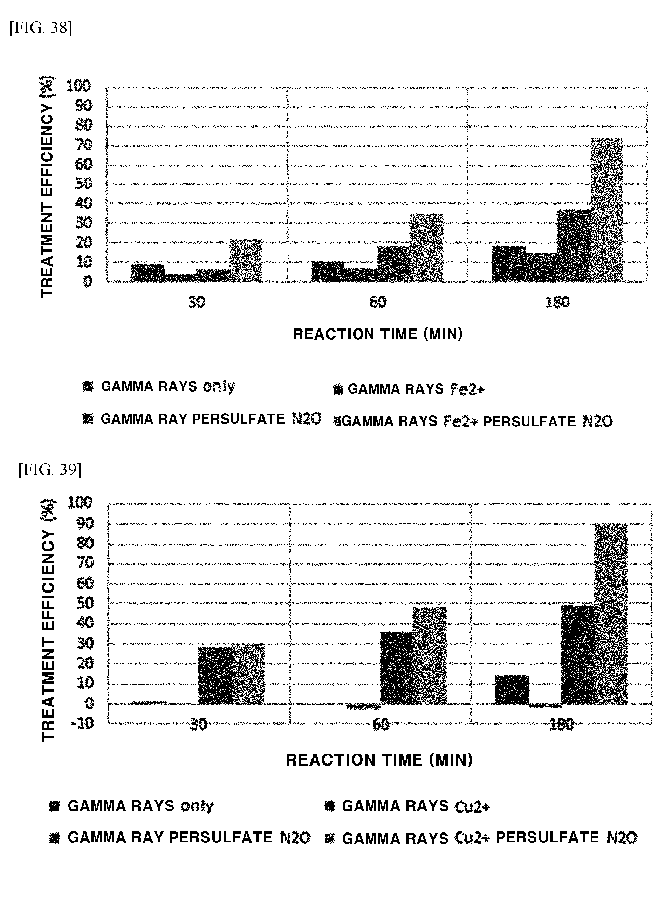

Specifically, the experiment was conducted in a batch where only metal ions were added to the liquid scintillation counter waste solution, a batch where an oxidizer and nitrous oxide were added to the liquid scintillation counter waste solution, and a batch where metal ions, an oxidizer, and nitrous oxide were added to the liquid scintillation counter waste solution. The treatment efficiency (%) of the liquid scintillation counter waste solution was calculated by subtracting the TOC concentration after irradiation from the TOC concentration of the liquid scintillation counter waste solution before irradiation, which was shown in FIG. 38 and Table 39.

When the gamma-ray irradiation doses were 5, 10, and 30 kGy (30, 60, and 180 minutes), the treatment efficiencies of the batch added with only metal ions were -0.5, -2.4, and -1.6%, respectively, the treatment efficiencies of the batch added with the oxidizer and nitrous oxide to the liquid scintillation counter waste solution were 28.2, 35.7, and 49.4%, respectively, and the treatment efficiencies of the batch added with metal ions, the oxidizer, and nitrous oxide to the liquid scintillation counter waste solution were 29.5, 48.4, and 89.8%, respectively.

**[Table 39]**

| Reaction time | Treatment condition | | | |
|---|---|---|---|---|
| (min) | Gamma rays only | Gamma rays + Cu²⁺ | Gamma rays + persulfate + N₂O | Gamma rays + Cu²⁺ + persulfate + N₂O |
| 30 | 0.7 | -0.5 | 28.2 | 29.5 |
| 60 | -0.7 | -2.4 | 35.7 | 48.4 |
| 180 | 14.3 | -1.6 | 49.4 | 89.8 |

### Example 18 - Wastewater treatment method using nickel metal and persulfate treatment

In order to treat wastewater with pH 9.7, salt 5.6%, total organic carbon (TOC) 3,882 mg/L, ammonia (NH₃) 2,410 mg/L, and nitrate nitrogen 0 mg/L, the wastewater treatment was performed by introducing nickel sulfate (NiSO₄) as a transition metal salt, NaOH as a strong base to adjust a base condition, and sodium peroxydisulfate as a strong oxidizer, respectively.

First, the concentration of NaOH was added to the wastewater at a concentration of 2.5 M to adjust the pH of the wastewater to 12. Here, nickel sulfate was added at a concentration of 0.4 M and stirred uniformly, and then SDS was injected to a concentration of 2 M. Then, after 1 hour after the treatment reaction was performed, the concentrations of TOC and ammonia were measured, and the treatment efficiency was calculated based on the results, which was shown in Table 40 below. The treatment efficiency was calculated as the percentage of the TOC and ammonia concentration (reduction) treated after 1 hour, when the initial TOC and ammonia concentration was 100.

### Example 19 - Wastewater treatment method using nickel metal and persulfate treatment

Even in the same manner as Example 18, the wastewater was treated, except that the concentration of nickel sulfate was 0.2 M. After 1 hour from the start of the treatment reaction, the TOC and ammonia concentrations and the treatment efficiency were measured in the same manner, which were shown in Table 40 below.

### Example 20 - Wastewater treatment method using nickel metal and persulfate treatment

Even in the same manner as Example 18, the wastewater was treated, except that the concentration of nickel sulfate was 0.1 M. After 1 hour from the start of the treatment reaction, the TOC and ammonia concentrations and the treatment efficiency were measured in the same manner, which were shown in Table 40 below.

### Example 21 - Wastewater treatment method using nickel metal and persulfate treatment

Even in the same manner as Example 18, the wastewater was treated, except that the concentration of nickel sulfate was 2.0 M. After 1 hour from the start of the treatment reaction, the TOC and ammonia concentrations and the treatment efficiency were measured in the same manner, which were shown in Table 40 below.

### Example 22 - Wastewater treatment method using nickel metal and persulfate treatment

Even in the same manner as Example 18, the wastewater was treated, except that the concentration of nickel sulfate was 4.0 M. After 1 hour from the start of the treatment reaction, the TOC and ammonia concentrations and the treatment efficiency were measured in the same manner, which were shown in Table 40 below.

### Example 23 - Wastewater treatment method using nickel metal and persulfate treatment

Even in the same manner as Example 18, the wastewater was treated, except that the concentration of nickel sulfate was 0.01 M. After 1 hour from the start of the treatment reaction, the TOC and ammonia concentrations and the treatment efficiency were measured in the same manner, which were shown in Table 40 below.

### Example 24 - Wastewater treatment method using nickel metal and persulfate treatment

Even in the same manner as Example 18, the wastewater was treated, except that a persulfate compound was added and treated at a concentration of 5 M. After 1 hour from the start of the treatment reaction, the TOC and ammonia concentrations and the treatment efficiency were measured in the same manner, which were shown in Table 40 below.

### Example 25 - Wastewater treatment method using nickel metal and persulfate treatment

Even in the same manner as Example 18, the wastewater was treated, except that a persulfate compound was added and treated at a concentration of 0.05 M. After 1 hour from the start of the treatment reaction, the TOC and ammonia concentrations and the treatment efficiency were measured in the same manner, which were shown in Table 40 below.

### Example 26 - Wastewater treatment method using nickel metal and persulfate treatment

Even in the same manner as Example 18, the wastewater was treated by adding nickel sulfate and sodium peroxydisulfate compounds without adding NaOH under conditions where the pH of the wastewater was 9.7. After 1 hour from the start of the treatment reaction, the TOC and ammonia concentrations and the treatment efficiency were measured in the same manner, which were shown in Table 40 below.

### Comparative Example 11: Wastewater treatment method with different nickel metal and persulfate treatment conditions

Even in the same manner as Example 18, the wastewater was treated without adding nickel sulfate. After 1 hour from the start of the treatment reaction, the TOC and ammonia concentrations and the treatment efficiency were measured in the same manner, which were shown in Table 40 below.

### Comparative Examples 12 and 13: Wastewater treatment method using conventional microbial treatment method

The same wastewater as Example 18 was treated using a conventional microbial treatment process. The operation was performed with MLSS 8,020 mg/L, DO 3.2 mg/L, and HRT 20 days for the microbial concentration. The TOC and ammonia concentrations and treatment efficiency were measured for the samples after 1 hour of operation, which was shown in Table 36 below (Comparative Example 17).

In addition, the same values were measured and calculated even for the treatment results for 480 hours, 20 days after operation, which were shown together in Table 40 (Comparative Example 18).

**[Table 40]**

| | TOC (mg/L) | NH₃ concentration (mg/L) | TOC treatment efficiency (%) | NH₃ treatment efficiency (%) |
|---|---|---|---|---|
| Wastewater before treatment | 3,882 | 2,410 | - | - |
| Example 18 | 1,012 | 710 | 73.9 | 70.5 |
| Example 19 | 2,424 | 1,132 | 37.6 | 53.0 |
| Example 20 | 2,575 | 1,440 | 33.7 | 40.2 |
| Example 21 | 2,892 | 1,628 | 25.5 | 32.4 |
| Example 22 | 3,443 | 2,019 | 11.3 | 16.2 |
| Example 23 | 3,676 | 2,314 | 5.3 | 4.0 |
| Example 24 | 3,771 | 2,380 | 2.9 | 1.2 |
| Example 25 | 2,739 | 1,604 | 29.4 | 33.4 |
| Example 26 | 2,601 | 1,788 | 33.0 | 25.8 |
| Comparative Example 11 | 3,790 | 2,351 | 2.4 | 2.4 |
| Comparative Example 12 | 3,810 | 2,400 | 1.9 | 0.4 |
| Comparative Example 13 | 1,020 | 1,230 | 73.7 | 49.0 |

Referring to Table 40 above, it may be seen that Example 20, where the nickel sulfate content was 0.4 M, showed the highest treatment efficiency, and when the nickel sulfate content was higher, particularly Example 22, in which the nickel sulfate content was more than 3.0 M, and Example and Comparative Example 6 (without nickel sulfate), where the nickel sulfate content was low, showed very low treatment efficiencies for both TOC and NH₃.

The difference in effect may also be confirmed depending on the content of persulfate. According to Examples 24 and 25, it was confirmed that the water treatment efficiency was drastically reduced when the content of persulfate was excessive or low. In addition, the synergistic effect of using both nickel sulfate and persulfate was maximized when the pH was 12 or higher, and thus, it was found that the treatment efficiency was reduced in Example 26 without adding NaOH.

When the treatment method of Example 18 was compared with that of Comparative Example, it was found that the treatment in Example 20 was significantly effective when the treatment was performed for the same 1 hour (Comparative Example 11), and the efficiency was similar to that of Comparative Example 13, which was the result after 480 hours of operation. Therefore, it was confirmed that the water treatment method according to the present disclosure may quickly treat wastewater including high-salinity nitrogen and/or phosphorus with high efficiency.

## Claims

1. A wastewater treatment method comprising introducing transition metal ions and a peroxide, under alkaline conditions, to wastewater including at least one of non-degradable organic matter, nitrogen, and phosphorus.

2. The wastewater treatment method of claim 1, wherein the wastewater is radioactive wastewater or livestock wastewater generated from a nuclear power facility.

3. The wastewater treatment method of claim 1, further comprising:
adding transition metal ions.

4. The wastewater treatment method of claim 1, wherein the wastewater treatment is performed under alkaline conditions of pH 9 or higher by adding barium hydroxide or sodium hydroxide.

5. The wastewater treatment method of claim 1, wherein 90% or more of the non-degradable organic matter is removed within 10 minutes after the introduction of the peroxide.

6. The wastewater treatment method of claim 1, wherein the transition metal ion is least one selected from the group consisting of scandium ion, titanium ion, vanadium ion, chromium ion, manganese ion, cobalt ion, cerium ion, copper ion, nickel ion, zinc ion, yttrium ion, zirconium ion, niobium ion, molybdenum ion, technetium ion, ruthenium ion, rhodium ion, palladium ion, silver ion, cadmium ion, hafnium ion, tantalum ion, tungsten ion, rhenium ion, osmium ion, iridium ion, platinum ion, gold ion, and mercury ion.

7. The wastewater treatment method of claim 1, wherein the peroxide is any one of persulfate or peroxide.

8. The wastewater treatment method of claim 1, wherein the transition metal ion is converted to a transition metal oxide, and
the peroxide is adsorbed on the surface of the transition metal oxide to increase the oxidation value of the transition metal oxide, thereby oxidizing and removing non-degradable organic matter.

9. A wastewater treatment device comprising:
a storage unit that stores wastewater including at least one of non-degradable organic matter, nitrogen, and phosphorus;
a reaction unit that communicates with the storage unit and in which any one of the non-degradable organic matter, nitrogen, and phosphorus is degraded; and
an introduction unit that communicates with the reaction unit and introduces a transition metal and peroxide to react with and degrade any one of the non-degradable organic matter, nitrogen, and phosphorus.

10. The wastewater treatment device of claim 9, wherein 90% or more of the non-degradable organic matter included in a radioactive waste solution used in a nuclear power-related facility is removed within 10 minutes.
